# EUROPEAN PATENT APPLICATION

(11) **EP 2 865 499 A1**
(43) Date of publication of application: **29.04.2015**
(21) Application number: 14190257.7
(22) Date of filing: 24.10.2014
(51) Int. Cl.: B25J 15/12

(54) **Gripping apparatus, robot, and gripping method**

(30) Priority: 28.10.2013 JP 2013223012; 31.10.2013 JP 2013226118
(71) Applicant: Seiko Epson Corporation, Shinjuku-ku, Tokyo (JP)
(72) Inventor: Shiomi, Masahiro, Nagano 392-8502 (JP)
(74) Representative: Hoffmann Eitle

(57) **Abstract**

A gripping apparatus (4) includes a plurality of holding sections (10). Each of the plurality of holding sections includes a flexible film-like member (25, 26). The plurality of holding sections are capable of gripping a plurality of different kinds of objects (2) to be gripped having different softness indexes in a range of 3 mm³/gf to 10 mm³/gf.

## Description

### BACKGROUND

### 1. Technical Field

The present invention relates to a gripping apparatus, a robot, and a gripping method for gripping an obj ect to be gripped.

### 2. Related Art

A robot that holds an object to be gripped is utilized in work such as assembly work and sorting work. There are a variety of objects to be gripped that a user desires the robot to hold. JP-A-2012-148380 (Patent Literature 1) discloses a robot hand (a gripping apparatus) capable of holding a flexible object to be gripped. The robot hand includes a pair of holding bodies. Bag bodies filled with gel-like fluid are set on the inner surfaces of the holding bodies. When the pair of holding bodies grips the object to be gripped, the bag bodies are deformed according to the shape of the object to be gripped. Therefore, it is possible to stably grip the flexible object to be gripped.

Besides, JP-A-9-103983 (Patent Literature 2) discloses a robot hand that holds objects to be clamped (objects to be gripped) arranged side by side. The robot hand includes a pair of finger forming bodies. The finger forming bodies are formed of a cylindrical soft material. Fingertip sections of the finger forming bodies can be expanded by supplying fluid into the fingertip sections. The fingertip sections are expanded after being inserted into a gap between the objects to be clamped adjacent to one another. Then, the fingertip sections are hardened. The robot hand can clamp and hold the object to be clamped with the hardened fingertip sections.

In the robot hand disclosed in Patent Literature 1, the pair of holding bodies set with the bag bodies holds and grips the object to be gripped from both sides. However, when objects to be gripped are set side by side, if the objects to be gripped adjacent to one another are not separated, the holding bodies set with the bag bodies cannot be inserted among the objects to be gripped adjacent to one another.

In the robot hand disclosed in Patent Literature 2, sides surfaces of the object to be clamped (the object to be gripped) are clamped by the hardened fingertip sections. The robot hand holds the object to be clamped with a frictional force generated when the side surfaces of the object to be clamped are pressed. Therefore, when holding the object to be clamped, the robot hand is easily affected by a surface state and hardness of the object to be clamped. In the case of an object to be clamped made of a flexible material or an object to be clamped having a slippery surface, the robot hand sometimes cannot stably hold the object to be clamped. Therefore, there has been a demand for a robot including a gripping apparatus that stable grips an object to be gripped made of a flexible material or an object to be gripped having a slippery surface.

Further, in the robot hands of the related art, it is sometimes difficult to grip, as an object to be gripped, each of a plurality of kinds of objects having different shapes. Therefore, there has been a demand for a gripping apparatus capable of gripping, as an object to be gripped, a plurality of kinds of objects having different shapes.

Among soft objects to be gripped, some objects to be gripped get out of shape when being gripped by a robot hand and lose their values. Therefore, there has been a demand for a gripping apparatus capable of stably gripping an object to be gripped that is flexible and easily get out of shape.

Note that the problems explained above are not problems of only a gripping apparatus that grips an object to be gripped but are problems common to a robot including the gripping apparatus and a gripping method.

### SUMMARY

An advantage of some aspects of the invention is to solve at least a part of the problems described above, and the invention can be implemented as the following aspects or application examples.

### Application Example 1

This application example is directed to a gripping apparatus that grips an object to be gripped. The gripping apparatus includes a plurality of holding sections. Each of the plurality of holding sections includes a flexible film-like member. The plurality of holding sections are capable of gripping a plurality of different kinds of objects to be gripped having different softness indexes in a range of 0.2 mm³/gf to 20 mm³/gf.

The gripping apparatus in this application example is capable of gripping a plurality of kinds of objects to be gripped ranging from a relatively soft object to be gripped having a softness index of 0.2 mm³/gf to a relatively hard obj ect to be gripped having a softness index of 20 mm³/gf. Therefore, it is possible to stably grip a plurality of kinds of objects to be gripped having different softness indexes.

### Application Example 2

This application example is directed to the gripping apparatus according to the application example described above, wherein the softness index is a value obtained by diving displacement of a pressing section by a load pressure of the pressing section on the basis of the displacement and the load pressure obtained in a test in which the pressing section having a surface area of approximately 520 mm², approximately 260 mm², or approximately 50 mm² is used and the pressing section is pressed against the object to be gripped.

### Application Example 3

This application example is directed to the gripping apparatus according to the application example described above, wherein the plurality of holding sections are capable of gripping a plurality of kinds of objects to be gripped having different softness indexes in a range of 0.5 mm³/gf to 10 mm³/gf.

### Application Example 4

This application example is directed to the gripping apparatus according to the application example described above, wherein the softness index is a value obtained by diving displacement of a pressing section by a load pressure of the pressing section on the basis of the displacement and the load pressure obtained in a test in which the pressing section having a surface area of approximately 260 mm² or approximately 50 mm² is used and the pressing section is pressed against the object to be gripped.

### Application Example 5

This application example is directed to the gripping apparatus according to the application example described above, wherein the plurality of holding sections are capable of gripping a plurality of kinds of objects to be gripped having different softness indexes in a range of 3 mm³/gf to 10 mm³/gf.

### Application Example 6

This application example is directed to the gripping apparatus according to the application example described above, wherein the softness index is a value obtained by diving displacement of a pressing section by a load pressure of the pressing section on the basis of the displacement and the load pressure obtained in a test in which the pressing section having a surface area of approximately 260 mm² is used and the pressing section is pressed against the object to be gripped.

### Application Example 7

This application example is directed to the gripping apparatus according to the application example described above, wherein the film-like member is formed of an elastic member having Shore A hardness of approximately 20 to approximately 90.

### Application Example 8

This application example is directed to the gripping apparatus according to the application example described above, wherein each of the plurality of holding sections further includes a first fixing section, a second fixing section provided in a position opposed to the first fixing section, and a supporting section that couples and supports the first fixing section and the second fixing section, a peripheral edge section of the film-like member includes a first end section and a second end section opposed to each other and a third end section and a fourth end section opposed to each other, the first end section and the second end section of the film-like member are respectively fixed by the first fixing section and the second fixing section, and the third end section and the fourth end section form unfixed free ends.

With this configuration, the first end section and the second end section of the film-like member are respectively fixed and the third end section and the fourth end section of the film-like member form the unfixed free ends. Therefore, it is possible to grasp each of a plurality of kinds of objects to be gripped having different shapes. If a flexible film-like member is used, it is possible to grip a soft object to be gripped without damaging the object to be gripped.

### Application Example 9

This application example is directed to the gripping apparatus according to the application example described above, wherein the supporting section is arranged on the rear side of a surface of the film-like member that comes into contact with the object to be gripped.

With this configuration, the supporting section does not interfere with the object to be gripped. Therefore, it is possible to stably grip objects to be gripped having various sizes.

### Application Example 10

This application example is directed to the gripping apparatus according to the application example described above, wherein the supporting section maintains a fixed distance between the first fixing section and the second fixing section.

With this configuration, a fixed distance is maintained between the first end section and the second end section of the film-like member. Therefore, it is possible to apply an appropriate gripping force to the object to be gripped according to deformation of the film-like member and stably grip a soft object to be gripped.

### Application Example 11

This application example is directed to the gripping apparatus according to the application example described above, wherein the supporting section is fixed between the first fixing section and the second fixing section.

With this configuration, a fixed distance is maintained between the first end section and the second end section of the film-like member. Therefore, it is possible to stably grip a soft object to be gripped.

### Application Example 12

This application example is directed to the gripping apparatus according to the application example described above, wherein the supporting section is turnable about a turning shaft between the first fixing section and the second fixing section.

With this configuration, it is possible to reduce likelihood that the supporting section damages the object to be gripped. Therefore, it is possible to stably grip a soft object to be gripped.

### Application Example 13

This application example is directed to the gripping apparatus according to the application example described above, wherein each of the plurality of holding sections further includes an urging section that applies, if the supporting section turns when the object to be gripped is gripped between the plurality of holding sections, an urging force that resists the turning of the supporting section.

With this configuration, when the object to be gripped is released, the supporting section is returned to an original position by the urging section. Therefore, it is possible to reduce likelihood that the supporting section damages the object to be gripped.

### Application Example 14

This application example is directed to the gripping apparatus according to the application example described above, which further includes a position changing section that adjusts a distance between the plurality of holding sections.

With this configuration, it is possible to arbitrarily grip and release the object to be gripped by adjusting the distance between the plurality of holding sections.

### Application Example 15

This application example is directed to a robot including the gripping apparatus according to the application example described above.

With this configuration, it is possible to implement a robot that stably grips a plurality of kinds of objects to be gripped having different softness indexes.

### Application Example 16

This application example is directed to the robot according to the application example described above, which further includes: a wrist joint section coupled to the gripping apparatus; a link coupled to the wrist joint section; a shoulder joint section coupled to the link; and a main body section in which the shoulder joint section is provided.

### Application Example 17

This application example is directed to a gripping method of gripping an object to be gripped using the gripping apparatus according to the application example described above. The gripping method includes: a first moving step for moving the gripping apparatus to locate the object to be gripped between the plurality of holding sections; a gripping step for reducing a distance between the plurality of holding sections to thereby grip the object to be gripped between the film-like members of the plurality of holding sections; a second moving step for moving the gripping apparatus in a state in which the gripping apparatus grips the object to be gripped; and a releasing step for increasing the distance between the plurality of holding sections to thereby release the object to be gripped.

### Application Example 18

This application example is directed to a gripping apparatus including a first gripping section and a second gripping section. At least one of the first gripping section and the second gripping section includes: a flexible gripping film; a first fixing section to which the gripping film is fixed; a second fixing section to which the gripping film is fixed in a portion different from a portion of the gripping film fixed by the first fixing section; and a first supporting section and a second supporting section turnably fixed to the first fixing section and the second fixing section. The first supporting section and the second supporting section are arranged on a rear surface side of a surface of the gripping film that comes into contact with the object to be gripped.

The gripping apparatus in this application example includes the gripping film included in the first gripping section and the second gripping section or any one of the first gripping section and the second gripping section. The gripping apparatus can clamp and grip the object to be gripped disposed between the first gripping section and the second gripping section by bringing the gripping film into contact with the object to be gripped. Since the gripping film has flexibility, the gripping film grips the object to be gripped while being deformed to wrap the exterior of the object to be gripped. Therefore, since large friction is unnecessary between the object to be gripped and the gripping apparatus, it is possible to hold the object to be gripped with a small gripping force (clamping force). It is possible to grip and convey an object to be gripped made of a flexible material, a material having a slippery surface, or the like without damaging the object to be gripped.

### Application Example 19

This application example is directed to the gripping apparatus according to the application example described above, wherein the first supporting section and the second supporting section include: turning shaft sections turnably fixed to the first fixing section and the second fixing section; and frame sections extended in directions crossing turning centers of the turning shaft sections from the turning shaft sections.

According to this application example, the frame sections turn about the turning centers of the turning shaft sections to follow the object to be gripped via the gripping film when the object to be gripped is gripped. That is, in a state in which the gripping apparatus does not grip the object to be gripped, the supporting sections including the frame sections are arranged to extend along the gripping film. Even when a space between objects to be gripped adjacent to each other is small, it is possible to easily insert the first fixing section or the second fixing section functioning as a gripping distal end section into the small space (gap) and cause the first fixing section or the second fixing section to perform an operation for gripping the target objects to be gripped without damaging the adjacent objects to be gripped.

In a state in which the object to be gripped is gripped by the gripping film, the frame sections of the first supporting section and the second supporting section turn to follow the object to be gripped via the gripping film. The object to be gripped gripped in the gripping film is not pressed and damaged by the first supporting section and the second supporting section. It is possible to stably support the first fixing section and the second fixing section. That is, the gripping film stretched by the first fixing section and the second fixing section can be attached to the gripping apparatus with stable tension.

### Application Example 20

This application example is directed to the gripping apparatus according to the application example described above, wherein the gripping film includes a first gripping area and a second gripping area extending along a stretching direction of the gripping film in an outer edge section of the first gripping area extending along the stretching direction of the gripping film stretched via the first fixing section and the second fixing section, and tension in the stretching direction of the gripping film is larger in the second gripping area than in the first gripping area.

The magnitude of the tension in this application example indicates that, when two objects are pulled (stretched) with the same stress per unit area on a cross section orthogonal to a stretching direction, tension is larger in the object having a small stretching rate, that is, coefficient of extension than the object having a large coefficient of extension. In other words, when objects having the same size and different tensions are pulled in the same stretching direction, an extension amount of the object having large tension is small and an extension amount of the object having small tension is large.

According to this application example, since the tension is large, a deformation amount of the second gripping area is suppressed to be small with respect to a deformation amount of the first gripping area at the time when the object to be gripped is gripped. When the object to be gripped is formed of a slippery material, the first gripping area is deformed to swell to correspond to the shape of the object to be gripped with respect to a direction in which the first gripping section and the second gripping section come close to each other. However, with repulsion of the swelling deformation of the first gripping area, action of slipping and moving works in a direction crossing the direction in which first gripping section and the second gripping section come close to each other.

In the second gripping area having high tension with respect to the first gripping area, the deformation by the object to be gripped is suppressed. As a result, the movement by the slipping of the object to be gripped in the direction crossing the direction in which the first gripping section and the second gripping section come close to each other is prevented. Therefore, it is possible to surely hold a flexible object to be gripped having a slippery surface with the gripping apparatus.

### Application Example 21

This application example is directed to the gripping apparatus according to the application example described above, wherein film thickness of the second gripping area is larger than film thickness of the first gripping area.

According to this application example, it is possible to easily form the second gripping area having high tension.

### Application Example 22

This application example is directed to the gripping apparatus according to the application example described above, wherein a tension reinforcing member having tension higher than the tension in the stretching direction of the gripping film in the first gripping area is joined to or included in the second gripping area.

According to this application example, it is possible to easily adjust the tension of the second gripping area according to the material and the thickness of the tension reinforcing member. As the tension reinforcing member, it is preferable to use, for example, a wire material of metal such as stainless steel or titanium or a wire material of high-strength synthetic resin.

### Application Example 23

This application example is directed to a conveying apparatus including a gripping apparatus including a first gripping section and a second gripping section that come close to each other to thereby grip an object to be gripped. At least one of the first gripping section and the second gripping section includes: a flexible gripping film having at least parallel two sides in the outer circumference; a first fixing section to which one side of the parallel two sides is fixed; a second fixing section to which the other side is fixed; and a first supporting section and a second supporting section turnably fixed to the first fixing section and the second fixing section. The first supporting section and the second supporting section are arranged on a rear surface side of a surface of the gripping film that comes into contact with the object to be gripped. The gripping apparatus stretches the gripping film via the first fixing section and the second fixing section.

The conveying apparatus in this application example includes the gripping film included in the first gripping section and the second gripping section or any one of the first gripping section and the second gripping section. The conveying apparatus can clamp and grip the object to be gripped disposed between the first gripping section and the second gripping section by bringing the gripping film into contact with the object to be gripped. Since the gripping film has flexibility, the gripping film grips the object to be gripped while being deformed to wrap the exterior of the object to be gripped. Therefore, since large friction is unnecessary between the object to be gripped and the gripping apparatus, it is possible to hold the object to be gripped with a small gripping force (clamping force). It is possible to grip and convey an object to be gripped made of a flexible material, a material having a slippery surface, or the like without damaging the object to be gripped.

### Application Example 24

This application example is directed to the conveying apparatus according to the application example described above, wherein the gripping apparatus includes: the first supporting section and the second supporting section; turning shaft sections turnably fixed to the first fixing section and the second fixing section; and frame sections extended in directions crossing turning centers of the turning shaft sections from the turning shaft sections.

According to this application example, the frame sections turn about the turning centers of the turning shaft sections to follow the object to be gripped via the gripping film when the object to be gripped is gripped. That is, in a state in which the gripping apparatus does not grip the object to be gripped, the supporting sections including the frame sections are arranged to extend along the gripping film. Even when a space between objects to be gripped adjacent to each other is small, it is possible to easily insert the first fixing section or the second fixing section functioning as a gripping distal end section into the small space (gap) and cause the first fixing section or the second fixing section to perform an operation for gripping the target objects to be gripped without damaging the adjacent objects to be gripped.

In a state in which the object to be gripped is gripped by the gripping film, the frame sections of the first supporting section and the second supporting section turn to follow the object to be gripped via the gripping film. The object to be gripped gripped in the gripping film is not pressed and damaged by the first supporting section and the second supporting section. It is possible to stably support the first fixing section and the second fixing section. That is, it is possible to obtain the conveying apparatus including the gripping apparatus to which the gripping film stretched by the first fixing section and the second fixing section is attached by stable tension.

### Application Example 25

This application example is directed to the conveying apparatus according to the application example described above, wherein the gripping film of the gripping apparatus includes a first gripping area and a second gripping area extending along a stretching direction of the gripping film in an outer edge section of the first gripping area extending along the stretching direction of the gripping film stretched via the first fixing section and the second fixing section, and tension in the stretching direction of the gripping film is larger in the second gripping area than the first gripping area.

According to this application example, since the tension is large, a deformation amount of the second gripping area is suppressed to be small with respect to a deformation amount of the first gripping area at the time when the object to be gripped is gripped. When the object to be gripped is formed of a slippery material, the first gripping area is deformed to swell to correspond to the shape of the object to be gripped with respect to a direction in which the first gripping section and the second gripping section come close to each other. However, with repulsion of the swelling deformation of the first gripping area, action of slipping and moving works in a direction crossing the direction in which first gripping section and the second gripping section come close to each other.

In the second gripping area having high tension with respect to the first gripping area, the deformation by the object to be gripped is suppressed. As a result, the movement by the slipping of the object to be gripped in the direction crossing the direction in which the first gripping section and the second gripping section come close to each other is prevented. Therefore, it is possible to obtain the conveying apparatus that can convey a flexible object to be gripped having a slippery surface to a predetermined position in a state in which the object to be gripped is surely held by the gripping apparatus.

### Application Example 26

This application example is directed to a robot including an arm and a gripping apparatus turnably coupled to the arm. The gripping apparatus includes a first gripping section and a second gripping section that come close to each other to thereby grip an object to be gripped. At least one of the first gripping section and the second gripping section includes: a flexible gripping film having at least parallel two sides in the outer circumference; a first fixing section to which one side of the parallel two sides is fixed; a second fixing section to which the other side is fixed; and a first supporting section and a second supporting section turnably fixed to the first fixing section and the second fixing section. The first supporting section and the second supporting section are arranged on a rear surface side of a surface of the gripping film that comes into contact with the object to be gripped. The gripping apparatus stretches the gripping film via the first fixing section and the second fixing section.

The robot in this application example includes the gripping film included in the first gripping section and the second gripping section or any one of the first gripping section and the second gripping section. The robot can clamp and grip the object to be gripped disposed between the first gripping section and the second gripping section by bringing the gripping film into contact with the object to be gripped. Since the gripping film has flexibility, the gripping film grips the object to be gripped while being deformed to wrap the exterior of the object to be gripped. Therefore, since large friction is unnecessary between the obj ect to be gripped and the gripping apparatus, it is possible to hold the object to be gripped with a small gripping force (clamping force). It is possible to grip and convey an object to be gripped made of a flexible material, a material having a slippery surface, or the like without damaging the object to be gripped.

### Application Example 27

This application example is directed to the robot according to the application example described above, wherein the gripping apparatus includes: the first supporting section and the second supporting section; turning shaft sections turnably fixed to the first fixing section and the second fixing section; and frame sections extended in directions crossing turning centers of the turning shaft sections from the turning shaft sections.

According to this application example, the frame sections turn about the turning centers of the turning shaft sections to follow the object to be gripped via the gripping film when the object to be gripped is gripped. That is, in a state in which the gripping apparatus does not grip the object to be gripped, the supporting sections including the frame sections are arranged to extend along the gripping film. Even when a space between objects to be gripped adjacent to each other is small, it is possible to easily insert the first fixing section or the second fixing section functioning as a gripping distal end section into the small space (gap) and cause the first fixing section or the second fixing section to perform an operation for gripping the target objects to be gripped without damaging the adjacent objects to be gripped.

In a state in which the object to be gripped is gripped by the gripping film, the frame sections of the first supporting section and the second supporting section turn to follow the object to be gripped via the gripping film. The object to be gripped gripped in the gripping film is not pressed and damaged by the first supporting section and the second supporting section. It is possible to stably support the first fixing section and the second fixing section. That is, it is possible to obtain the robot including the gripping apparatus to which the gripping film stretched by the first fixing section and the second fixing section is attached by stable tension.

### Application Example 28

This application example is directed to the robot according to the application example described above, wherein the gripping film of the gripping apparatus includes a first gripping area and a second gripping area extending along a stretching direction of the gripping film in an outer edge section of the first gripping area extending along the stretching direction of the gripping film stretched via the first fixing section and the second fixing section, and tension in the stretching direction of the gripping film is larger in the second gripping area than the first gripping area.

According to this application example, since the tension is large, a deformation amount of the second gripping area is suppressed to be small with respect to a deformation amount of the first gripping area at the time when the object to be gripped is gripped. When the object to be gripped is formed of a slippery material, the first gripping area is deformed to swell to correspond to the shape of the object to be gripped with respect to a direction in which the first gripping section and the second gripping section come close to each other. However, with repulsion of the swelling deformation of the first gripping area, action of slipping and moving works in a direction crossing the direction in which first gripping section and the second gripping section come close to each other.

In the second gripping area having high tension with respect to the first gripping area, the deformation by the object to be gripped is suppressed. As a result, the movement by the slipping of the object to be gripped in the direction crossing the direction in which the first gripping section and the second gripping section come close to each other is prevented. Therefore, it is possible to obtain the robot that can convey a flexible object to be gripped having a slippery surface to a predetermined position in a state in which the object to be gripped is surely held by the gripping apparatus.

The invention can also be implemented in various application examples other than the application examples explained above. For example, the invention can be implemented in forms such as a robot, a gripping apparatus (a robot hand), a conveying apparatus, a gripping method using the gripping apparatus, a computer program for implementing functions of the method or the apparatuses, a non-transitory storage medium having recorded therein the computer program.

### BRIEF DESCRIPTION OF THE DRAWINGS

The invention will be described with reference to the accompanying drawings, wherein like numbers reference like elements.
Figs. 1A and 1B are schematic perspective views showing the configuration of a robot hand in a first embodiment.
Figs. 2A and 2B are a schematic perspective view and a schematic side sectional view showing the overall configuration of the robot hand.
Figs. 3A and 3B are a front view and a rear view of a holding section of the robot hand.
Figs. 4A and 4B are main part schematic sectional views of the robot hand.
Figs. 5A to 5C are schematic diagrams for explaining motions of a first to fourth bars.
Figs. 6A to 6D are schematic diagrams for explaining motions of the first to fourth bars.
Fig. 7 is a flowchart for explaining a method of moving an object to be gripped.
Figs. 8A to 8D are schematic diagrams for explaining the method of moving the object to be gripped.
Figs. 9A to 9D are schematic diagrams for explaining the method of moving the object to be gripped.
Figs. 10A and 10B are diagrams showing a measuring apparatus for and a measurement result of softness of the object to be gripped.
Fig. 11 is a diagram showing dimensions of a test object used for a test shown in Figs. 10A and 10B.
Figs. 12A and 12B are graphs showing results of the softness test.
Figs. 13A and 13B are graphs showing results of the softness test.
Figs. 14A and 14B are graphs showing results of the softness test.
Figs. 15A and 15B are graphs showing results of the softness test.
Fig. 16 is a diagram showing the configuration of a robot hand in a second embodiment.
Figs. 17A to 17D are diagrams showing the configuration of a robot hand in a third embodiment.
Figs. 18A and 18B are schematic perspective views showing the configuration of a gripping apparatus according to a fourth embodiment.
Figs. 19A and 19B are diagrams showing the configuration of the gripping apparatus according to the fourth embodiment, wherein Fig. 19A is a schematic perspective view and Fig. 19B is a sectional view in an A-A' part direction shown in Figs. 18A and 18B and Fig. 19A.
Figs. 20A and 20B are diagrams of the gripping apparatus according to the fourth embodiment, wherein Fig. 20A is a Y direction partial side view of Fig. 18A and Fig. 20B is a sectional view of a C-C' part shown in Fig. 20A.
Figs. 21A and 21B are diagrams of the gripping apparatus according to the fourth embodiment, wherein Fig. 21A is a Y direction partial side view of Fig. 18B and Fig. 21B is a sectional view of a C-C' part shown in Fig. 21A.
Figs. 22A and 22B are diagrams of the gripping apparatus according to the fourth embodiment, wherein Fig. 22A is a Y direction partial side view of Fig. 19A and Fig. 22B is a sectional view of a C-C' part shown in Fig. 22A.
Fig. 23A is a main part schematic sectional view showing a first urging section and a base section.
Fig. 23B is a main part schematic sectional view showing a connection structure for a first bar and a first distal end section.
Figs. 24A to 24C are schematic diagrams for explaining motions of first to fourth bars.
Figs. 25A to 25D are schematic diagrams for explaining motions of the first to fourth bars.
Figs. 26A and 26B are sectional views showing other forms of a gripping film included in the gripping apparatus according to the fourth embodiment.
Figs. 27A to 27D are schematic diagrams for explaining action and effects of the gripping film included in the gripping apparatus according to the fourth embodiment.
Fig. 28 is a perspective view showing the structure of a vertical multi-joint robot according to a fifth embodiment.
Fig. 29 is a schematic front view showing the structure of a horizontal multi-joint robot according to the fifth embodiment.
Fig. 30 is a schematic front view showing the structure of a double-arm robot according to the fifth embodiment.

### DESCRIPTION OF EXEMPLARY EMBODIMENTS

### First Embodiment

### Configuration and operation

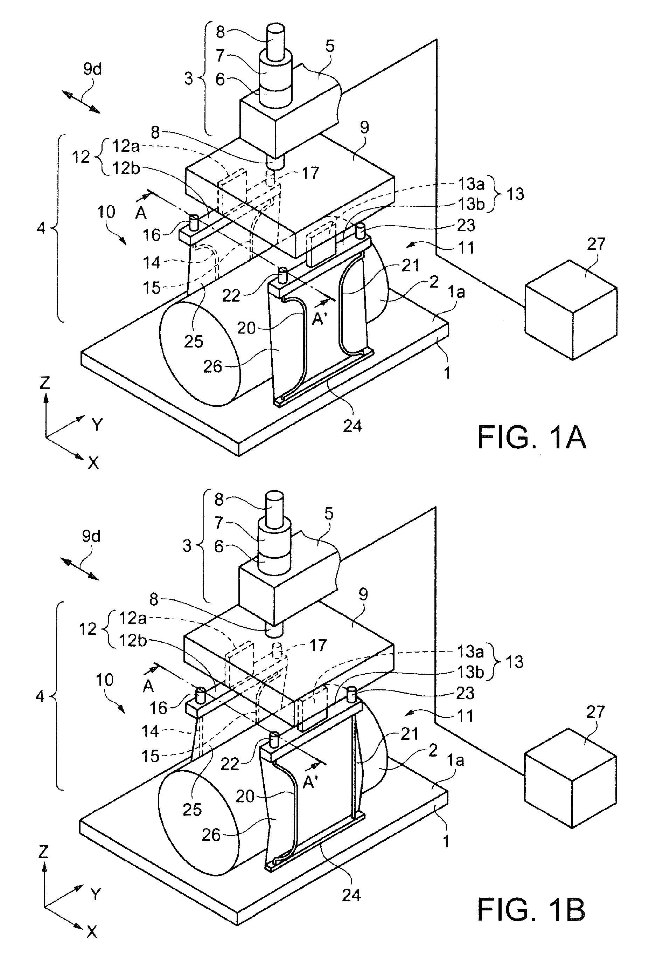

In this embodiment, a robot hand functioning as a gripping apparatus and an example in which an object to be gripped (sometimes also referred to as "object to be clamped") is held using the robot hand are explained with reference to Figs. 1A to 9D.

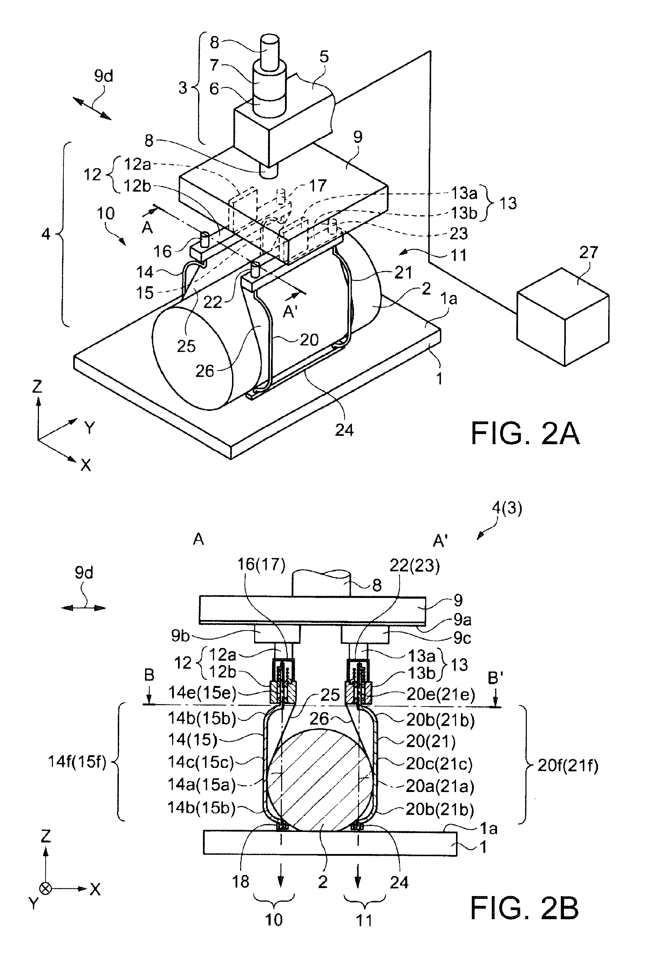

Figs. 1A to 2A are schematic perspective views showing the configuration of the robot hand. Fig. 1A shows a state immediately before the robot hand holds the object to be gripped. Fig. 1B is a diagram showing a state in which the robot hand comes into contact with the object to be gripped. Fig. 2A shows a state in which the robot hand holds the object to be gripped. Fig. 2B is a schematic sectional view taken along an A-A' line in Fig. 2A showing the configuration of the robot hand. Note that, in the figures referred to in the following explanation, scales are varied for each of members in order to show the members in sizes recognizable on the figures.

As shown in Figs. 1A to 2B, an object to be gripped 2 is placed on a placing table 1 having a square tabular shape. A surface of the placing table 1 facing the upper side in the figure is a plane 1a. In the following explanation, directions orthogonal to each other along the plane 1a are represented as X direction and Y direction. A direction orthogonal to the X direction and the Y direction is represented as Z direction. A direction of the normal of the plane 1a is a direction opposite to a direction in which gravitational acceleration acts. This direction is represented as +Z direction.

The object to be gripped 2 is not particularly limited and may be a flexible object or may be a hardly deformable object. The object to be gripped 2 is an object such as ham, sausage, cheese, cream croquette, konnyaku, tofu, or agar. To clearly show the figures, only one object to be gripped 2 is placed on the placing table 1. However, a plurality of objects to be gripped 2 may be arrayed and set close to one another on the placing table 1.

A robot hand 4 set in a robot 3 is located in the Z direction of the object to be gripped 2. The robot 3 includes an arm 5 extending in the Y direction and a not-shown plurality of arms and joints connected to the arm 5. The robot 3 can move the arm 5 by turning the joints.

A lifting and lowering mechanism 6 and a turning mechanism 7 are set at the distal end of the arm 5. The lifting and lowering mechanism 6 and the turning mechanism 7 turn a lifting and lowering turning shaft 8 and reciprocatingly move the lifting and lowering turning shaft 8 in the Z direction. The structures of the lifting and lowering mechanism 6 and the turning mechanism 7 are not particularly limited. In the lifting and lowering mechanism 6, a motor and a ball screw, a linear motor, a rack and a pinion, or the like can be used. For example, in this embodiment, the lifting and lowering mechanism 6 has a structure in which a motor and a ball screw are combined. The ball screw linearly moves the lifting and lowering turning shaft 8. The turning mechanism 7 has a structure in which a motor and a reduction gear are combined. The reduction gear turns the lifting and lowering turning shaft 8.

The robot hand 4 is set at an end in a -Z direction of the lifting and lowering turning shaft 8. The robot hand 4 includes a position changing section 9 connected to the lifting and lowering shaft 8. The position changing section 9 is formed in a substantially rectangular parallelepiped shape. On a surface on the -Z direction side of the position changing section 9, a pair of rails 9a is set to extend in the X direction. A first stage 9b and a second stage 9c are set to be hung from the rails 9a. The first stage 9b and the second stage 9c move in ±X directions along the rails 9a. The ±X directions in which the first stage 9b and the second stage 9c move are set as position changing directions 9d.

The position changing section 9 includes a linearly moving mechanism on the inside. The linearly moving mechanism reciprocatingly moves the first stage 9b and the second stage 9c in the position hanging directions 9d. The position changing section 9 can move the first stage 9b and the second stage 9c independently from each other. The structure of the linearly moving mechanism included in the position changing section 9 is not particularly limited. A mechanism same as the lifting and lowering mechanism 6 can be used. In this embodiment, for example, the linearly moving mechanism is configured by combining a step motor and a ball screw.

On the -Z direction side of the first stage 9b, a first holding section 10 functioning as a holding section is set to be connected to the first stage 9b. On the -Z direction side of the second stage 9c, a second holding section 11 functioning as a holding section is set to be connected to the second stage 9c. The position changing section 9 includes a function for changing relative positions of the first holding section 10 and the second holding section 11 by moving the first stage 9b and the second stage 9c. Note that, in control of the relative positions, for example, a method by position control by a template set in advance, a method by gripping pressure control for performing gripping while monitoring a gripping pressure with a pressure sensor or the like can be used.

The first holding section 10 includes a first base section 12 functioning as a first fixing section connected to the position changing section 9. The position changing section 9 moves the first base section 12. The first base section 12 is formed in a shape in which a rectangular parallelepiped lateral member 12b extending in the Y direction is connected to, in the center, one end of a square bar-like longitudinal member 12a extending in the Z direction. Similarly, the second holding section 11 includes a second base section 13 functioning as a first fixing section connected to the position changing section 9. The position changing section 9 moves on the second base section 13. The second base section 13 is formed in a shape in which a rectangular parallelepiped lateral member 13b extending in the Y direction is connected to, in the center, one end of a square bar-like longitudinal member 13a extending in the Z direction. The longitudinal member 12a and the longitudinal member 13a are connected to the linear moving mechanism of the position changing section 9. The interval between the longitudinal member 12a and the longitudinal member 13a is changed by the position changing section 9.

On the -Z direction side of the lateral member 12b, a first bar 14 functioning as a supporting section and a second bar 15 functioning as a supporting section extending in the -Z direction are set. The first bar 14 is set to be turnable about a turning shaft 14a extending along the Z direction. Similarly, the second bar 15 is also set to be turnable about a turning shaft 15a extending along the Z direction. The turning shaft 14a and the turning shaft 15a are orthogonal to the position changing directions 9d. On the Z direction side of the lateral member 12b, a first urging section 16 functioning as an urging section is set in a place opposed to the first bar 14. A second urging section 17 functioning as an urging section is set in a place opposed to the second bar 15.

The first urging section 16 generates a torque corresponding to an angle at which the first bar 14 turns. Similarly, the second urging section 17 is connected to the second bar 15 and generates torque corresponding to an angle at which the second bar 15 turns. The first bar 14 and the second bar 15 are urged in a predetermining turning direction by the first urging section 16 and the second urging section 17.

The first bar 14 is a round bar having two arcuate sections 14b and formed in a shape curved in a bow shape or a substantial bow shape. Both ends of the first bar 14 are formed in a linear shape and arranged along the turning shaft 14a. The turning shaft 14a is formed in an imaginary shape equivalent to a chord for the bow shape of the first bar 14. A portion between the two arcuate sections 14b is a place most distant from the turning shaft 14a. This portion is set as a projecting section 14c. Similarly, the second bar 15 includes two arcuate sections 15b and is formed in a shape curved in a bow shape or a substantial bow shape. Both ends of the second bar 15 are formed in a linear shape and arranged along the turning shaft 15a. The turning shaft 15a is formed in an imaginary shape equivalent to a chord for the bow shape of the second bar 15. A portion between the two arcuate sections 15b is a place most distant from the turning shaft 15a. This portion is set as a projecting section 15c.

A first distal end section 18 functioning as a second fixing section is set at ends on the -Z direction side of the first bar 14 and the second bar 15. The first bar 14 and the second bar 15 are set to be turnable with respect to the first distal end section 18. The first bar 14 is turnably supported by the lateral member 12b and the first distal end section 18. Similarly, the second bar 15 is turnably supported by the lateral member 12b and the first distal end section 18. The lateral member 12b, the first distal end section 18, the turning shaft 14a, and the turning shaft 15a form a rectangle. Therefore, even if the first bar 14 turns about the turning shaft 14a and the second bar 15 turns about the turning shaft 15a, relative positions of the lateral member 12b and the first distal end section 18 do not change.

The second holding section 11 has a shape same as the shape of the first holding section 10. On the -Z direction side of the lateral member 13b, a third bar 20 functioning as a supporting section and a fourth bar 21 functioning as a supporting section extending in the -Z direction are set. The third bar 20 is set to be turnable about a turning shaft 20a extending along the Z direction. Similarly, the fourth bar 21 is also set to be turnable about a turning shaft 21a extending along the Z direction. The turning shaft 20a and the turning shaft 21a are orthogonal to the position changing directions 9d. On the Z direction side of the lateral member 13b, a third urging section 22 functioning as an urging section is set in a place opposed to the third bar 20. A fourth urging section 23 functioning as an urging section is set in a place opposed to the fourth bar 21.

The third urging section 22 is connected to the third bar 20 and generates a torque corresponding to an angle at which the third bar 20 turns. Similarly, the fourth urging section 23 is connected to the fourth bar 21 and generates torque corresponding to an angle at which the fourth bar 21 turns. The third bar 20 and the fourth bar 21 are urged in a predetermined turning direction by the third urging section 22 and the fourth urging section 23.

The third bar 20 includes two arcuate sections 20b and is formed in a shape curved in a bow shape or a substantial bow shape. Both ends of the third bar 20 are formed in a linear shape and arranged along the turning shaft 20a. The turning shaft 20a is formed in an imaginary shape equivalent to a chord for the bow shape of the third bar 20. A portion between the two arcuate sections 20b is a place most distant from the turning shaft 20a. This portion is set as a projecting section 20c. Similarly, the fourth bar 21 includes two arcuate sections 21b and is formed in a shape curved in a bow shape or a substantial bow shape. Both ends of the fourth bar 21 are formed in a linear shape and arranged along the turning shaft 21a. The turning shaft 21a is formed in an imaginary shape equivalent to a chord for the bow shape of the fourth bar 21. A portion between the two arcuate sections 21b is a place most distant from the turning shaft 21a. This portion is set as a projecting section 21c.

A second distal end section 24 functioning as a second fixing section is set at ends on the -Z direction side of the third bar 20 and the fourth bar 21. The third bar 20 and the fourth bar 21 are set to be turnable with respect to the second distal end section 24. The third bar 20 is turnably supported by the lateral member 13b and the second distal end section 24. Similarly, the fourth bar 21 is turnably supported by the lateral member 13b and the second distal end section 24. The lateral member 13b, the second distal end section 24, the turning shaft 20a, and the turning shaft 21a form a rectangle. Therefore, even if the third bar 20 turns about the turning shaft 20a and the fourth bar 21 turns about the turning shaft 21a, relative positions of the lateral member 13b and the second distal end section 24 do not change.

A linear portion of the first bar 14 inserted into the lateral member 12b is set as a linear section 14e. A portion of the first bar 14 between the lateral member 12b and the first distal end section 18 is set as a curved section 14f. The turning shaft 14a crosses the lateral member 12b and the first distal end section 18. The linear section 14e extends along the turning shaft 14a. The curved section 14f is away from the turning shaft 14a. A linear portion of the second bar 15 inserted into the lateral member 12b is set as a linear section 15e. A portion of the second bar 15 between the lateral member 12b and the first distal end section 18 is set as a curved section 15f. The turning shaft 15a crosses the lateral member 12b and the first distal end section 18. The linear section 15e extends along the turning shaft 15a. The curved section 15f is away from the turning shaft 15a.

A linear portion of the third bar 20 inserted into the lateral member 13b is set as a linear section 20e. A portion of the third bar 20 between the lateral member 13b and the second distal end section 24 is set as a curved section 20f. The turning shaft 20a crosses the lateral member 13b and the second distal end section 24. The linear section 20e extends along the turning shaft 20a. The curved section 20f is away from the turning shaft 20a. A linear portion of the fourth bar 21 inserted into the lateral member 13b is set as a linear section 21e. A portion of the fourth bar 21 between the lateral member 13b and the second distal end section 24 is set as a curved section 21f. The turning shaft 21a crosses the lateral member 13b and the second distal end section 24. The linear section 21e extends along the turning shaft 21a. The curved section 21f is away from the turning shaft 21a.

An inner side first sheet 25 (also referred to as sheet 25) functioning as a flexible film-like member is set on the object to be gripped 2 side between the lateral member 12b and the first distal end section 18. One end section of the inner side first sheet 25 is fixed to the lateral member 12b. The other end section is fixed to the first distal end section 18. Similarly, an inner side second sheet 26 (also referred to as sheet 26) functioning as a flexible film-like member is set on the object to be gripped 2 side between the lateral member 13b and the second distal end section 24. One end section of the inner side second sheet 26 is fixed to the lateral member 13b. The other end section is fixed to the second distal end section 24. The material of the inner side first sheet 25 and the inner side second sheet 26 only has to be a material having elasticity and is not particularly limited. As the material of the inner side first sheet 25 and the inner side second sheet 26, for example, cloth woven with synthetic rubber such as silicon rubber, natural rubber, and thread-like rubber can be used. In this embodiment, silicon rubber is used for the inner side first sheet 25 and the inner side second sheet 26.

When the position changing section 9 reduces the interval between the first stage 9b and the second stage 9c, the inner side first sheet 25 and the inner side second sheet 26 come into contact with side surfaces and a bottom surface on the side surface side of the object to be gripped 2. The first holding section 10 and the second holding section 11 clamp and hold the object to be gripped 2 with the inner side first sheet 25 and the inner side second sheet 26.

A control unit 27 is set on the Y direction side in the figure of the robot hand 4. The control unit 27 is a device that performs control of the arm 5 and control of the robot hand 4. The control unit 27 moves the first stage 9b and the second stage 9c to adjust the interval between the first holding section 10 and the second holding section 11.

The material of the first base section 12, the second base section 13, the first distal end section 18, the second distal end section 24, the first bar 14, the second bar 15, the third bar 20, and the fourth bar 21 only has to be a material withstanding cleaning and sterilization and having rigidity and is not particularly limited. Metal, silicon resin, and the like can be used. In this embodiment, for example, stainless steel is adopted as the material of the first base section 12, the second base section 13, the first distal end section 18, the second distal end section 24, the first bar 14, the second bar 15, the third bar 20, and the fourth bar 21. Note that, as the cleaning, for example, a method obtained by combining a method of immersing an object to be gripped in cleaning liquid and cleaning the object to be gripped with ultrasound and mechanical cleaning such as brushing can be used. As the sterilization, for example, sterilization by boiling, chlorination, or the like can be performed.

As shown in Fig. 1A, when the robot hand 4 does not hold the object to be gripped 2, the first bar 14 and the second bar 15 are arranged along the same plane. The third bar 20 and the fourth bar 21 are arranged along the same plane. As shown in Fig. 1B, when the first base section 12 and the second base section 13 come close to each other, the first to fourth bars 14 to 21 come into contact with the object to be gripped 2. Since the first to fourth bars 14 to 21 are curved in a bow shape, the first to fourth bars 14 to 21 turn and the first distal end section 18 and the second distal end section 24 are located further on the center side than the outer periphery in the ±X directions of the object to be gripped 2.

As shown in Fig. 2A, the first base section 12 and the second base section 13 come closer to each other. The first bar 14 and the second bar 15 project to a -X side and the third bar 20 and the fourth bar 21 project to the X side. The first distal end section 18 and the second distal end section 24 are located further on the center side than the outer periphery in the X direction of the object to be gripped 2.

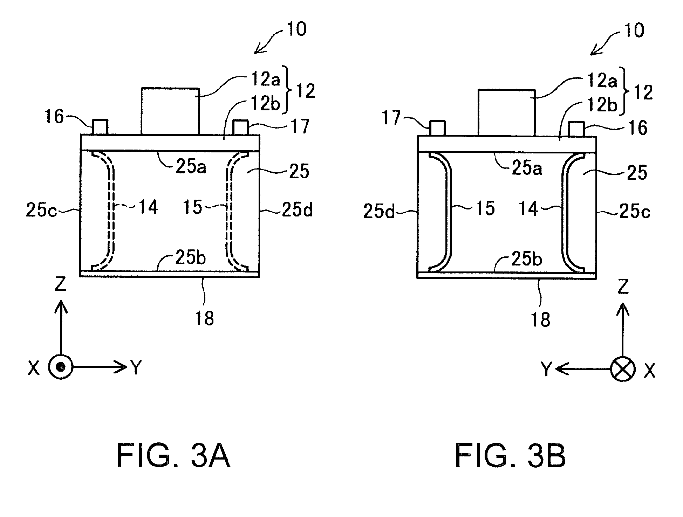

Fig. 3A is a front view of the first holding section 10 of the robot hand. Fig. 3B is a rear view of the first holding section 10. A peripheral edge section of the inner side first sheet 25 (the film-like member) includes a first end section 25a and a second end section 25b opposed to each other and a third end section 25c and a fourth end section 25d opposed to each other. In this example, the first end section 25a and the second end section 25b are an upper end and a lower end. The third end section 25c and the fourth end section 25d are both side ends. The third end section 25c and the fourth end section 25d are preferably adjacent to the first end section 25a and the second end section 25b (i.e. , present between the first end section 25a and the second end section 25b). The first end section 25a of the inner side first sheet 25 is fixed by the first base section 12 functioning as a first fixing section. The second end section 25b is fixed by the first distal end section 18 functioning as second fixing section. The third end section 25c and the fourth end section 25d of the inner side first sheet 25 form unfixed free ends. The first bar 14 and the second bar 15 functioning as supporting sections are arranged on the rear side of a surface of the inner side first sheet 25 that comes into contact with the object to be gripped 2. Note that, the front surface of the inner side first sheet 25 seen in Fig. 3A is equivalent to the "surface that comes into contact with the object to be gripped". The surface of the inner side first sheet 25 seen in Fig. 3B is equivalent to the rear surface.

In the first holding section 10, the first end section 25a and the second end section 25b of the inner side first sheet 25 are fixed and the third end section 25c and the fourth end section 25d form the free ends. Therefore, as shown in Figs. 1A and 1B, the first holding section 10 can stably grip the object to be gripped 2 having length larger than the width of the inner side first sheet 25. That is, if the third end section 25c and the fourth end section 25d are fixed to some fixing sections, when the object to be gripped 2 having the length larger than the width of the inner side first sheet 25 is gripped, the fixing sections interfere with the object to be gripped 2 (specifically, push the object to be gripped 2). Therefore, it is likely that the object to be gripped is excessively deformed and damaged. When the object to be gripped 2 is gripped with a weak force not to excessively deform the object to be gripped 2, it is likely that the object to be gripped 2 is dropped. On the other hand, in this embodiment, since the third end section 25c and the fourth end section 25d form the free ends, the object to be gripped 2 having the length larger than the width of the inner side first sheet 25 is not excessively deformed or is not dropped. It is possible to stably grip the object to be gripped 2. The first holding section 10 in this embodiment can also stably grip an object to be gripped having length smaller than the width of the inner side first sheet 25. Since the inner side first sheet 25 is flexible, it is possible to grip the soft object to be gripped 2 without damaging the object to be gripped 2.

Note that, when the object to be gripped 2 having the length larger than the width of the inner side first sheet 25 is gripped, the object to be gripped 2 projects to the outer sides (both sides in the Y direction) of the third end section 25c and the fourth end section 25d (Fig. 2A). Therefore, to allow the inner side first sheet 25 to firmly grip the object to be gripped 2 in the third end section 25c and the fourth end section 25d, by reinforcing the third end section 25c and the fourth end section 25d, member strength of the third end section 25c and the fourth end section 25d may be increased to be higher than member strength in the center of the inner side first sheet 25. For example, the third end section 25c and the fourth end section 25d may be formed in a multilayer structure including a plurality of elastic member layers. Alternatively, the thickness in the third end section 25c and the fourth end section 25d may be set larger than the center in the center of the inner side first sheet 25. Note that it is preferable to prevent unevenness from occurring on the front surface of the inner side first sheet 25 by providing layers or members for reinforcement on the rear surface sides (sides of surfaces not coming into contact with the object to be gripped 2).

As explained above, as the material of the inner side first sheet 25, for example, various flexible members and elastic members such as cloth woven with synthetic rubber, elastomer, natural rubber, thread-like rubber, and elastomer can be used. Specifically, for example, silicon rubber, nitrile rubber, fluororubber, ethylene propylene (ETP) rubber, and the like can be used. The elastic member used for the inner side first sheet 25 preferably has characteristics explained below.
(1) Shore A hardness: in a range of approximately 20 to approximately 90, in particular, approximately 70 to approximately 80
(2) Tensile strength: approximately 6 to approximately 10 MPa, in particular approximately 7 to approximately 9 MPa
(3) Stretch: approximately 250 to approximately 400%, in particular, approximately 290 to 350%

The "Shore A hardness" is a value measure according to JIS K 6253 or a standard equivalent thereto (ISO 7619, ASTM D 2240, etc.) . The "tensile strength" and the "stretch" are values measured according to JIS K 6251 or a standard equivalent thereto (ASTM D 471, etc.).

Among the three characteristics, the hardness (the Shore A hardness) is estimated to be most relevant concerning an ability of the inner side first sheet 25 for gripping a soft object to be gripped without damaging the object to be gripped. This is because the hardness is an index indicating a degree of hardness or softness of an elastic material. On the other hand, the tensile strength and the stretch are estimated to be slightly less relevant to the ability for gripping a soft object to be gripped without damaging the object to be gripped compared with the hardness. From this viewpoint, the elastic material forming the inner side first sheet 25 (the film-like member) of the robot hand (the gripping apparatus) that grips a soft object to be gripped preferably at least has hardness in the range of the Shore A hardness.

The material of the inner side first sheet 25 used in the robot hand (the gripping apparatus) that grips food as an object to be gripped is preferably a material conforming to laws and regulations (e.g., Japanese Food Hygiene Law Notification No. 85 and U.S. FDA Regulations)) that an apparatus that grips food should satisfy. On the other hand, as the material of the inner side first sheet 25 used in a robot hand (a gripping apparatus) that does not grip food as an object to be gripped, a material not satisfying the laws and the regulations can be used. Note that all of silicon rubber, nitrile rubber, fluororubber, and ethylene propylene (ETP) rubber can be used as an elastic material that satisfies the laws and the regulations that the apparatus that grips food should satisfy.

In this embodiment, as the material of the inner side first sheet 25, for example, silicon rubber conforming to Japanese Food Hygiene Law Notification No. 85 and having Shore A hardness of approximately 70, tensile strength of approximately 7.4 MPa, and stretch of approximately 300% is used.

Note that, in this embodiment, the inner side first sheet 25 has a rectangular shape. However, the inner side first sheet 25 may have a shape other than the rectangular. For example, a part or all of the peripheral edge section of the inner side first sheet 25 may be formed by a curved line. When the inner side first sheet 25 has such various shapes, it is also preferable that the peripheral edge section of the inner side first sheet 25 includes the four end sections, i.e., the first end section to the fourth end section and, among the end sections, the first end section and the second end section, which are an opposed pair of end sections, are fixed and the third end section and the fourth end section, which are the other opposed pair of end sections, are formed as unfixed free ends. It is preferable that a structure material is not provided at all in the positions of the third end section and the fourth end section and in front and behind the third end section and the fourth end section (in the ±X directions in Figs. 3A and 3B) The "structure material" means a firm member for maintaining the structure and the shape of the entire apparatus. Then, the inner side first sheet 25 can grasp an object to be gripped without structure materials such as the fixing sections interfering with the object to be gripped. Therefore, it is possible to stably grip objects to be gripped having various lengths and sizes.

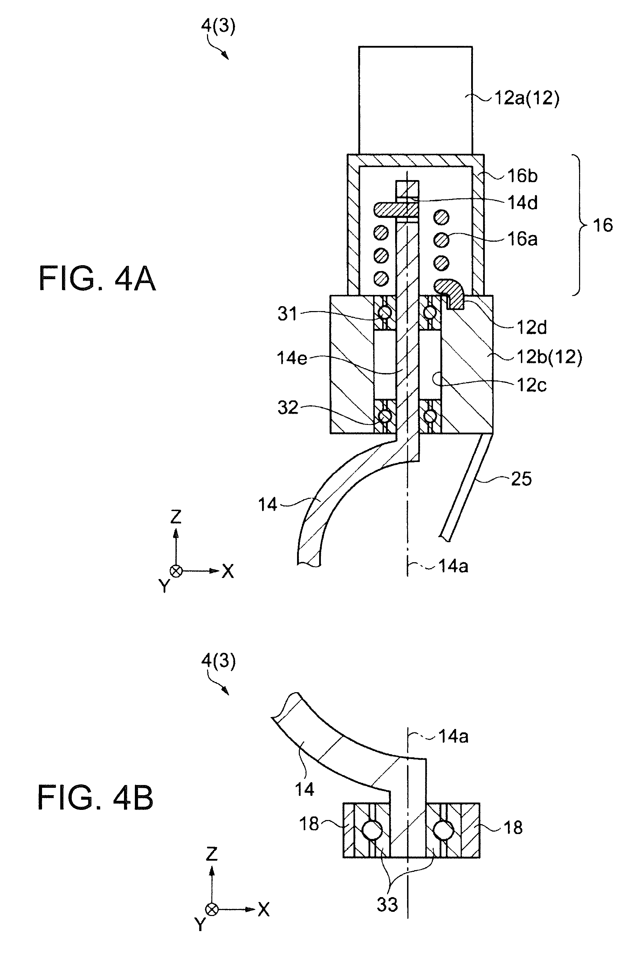

Fig. 4A is a main part schematic sectional view showing the first urging section and the base section. As shown in Fig. 4A, a through-hole 12c is set in the lateral member 12b. The first bar 14 is inserted into the through-hole 12c. In the through-hole 12c, a first bearing 31 functioning as a bearing mechanism and a second bearing 32 functioning as a bearing mechanism are set. The first bearing 31 and the second bearing 32 turnably support the first bar 14. The first bearing 31 and the second bearing 32 support the first bar 14 in two places. Consequently, the first bearing 31 and the second bearing 32 can suppress the linear section 14e of the first bar 14 from tilting with respect to the turning shaft 14a and cause the first bar 14 to accurately turn about the turning shaft 14a.

The first bearing 31 and the second bearing 32 only have to turn the first bar 14 with low frictional resistance. A type of the first bearing 31 and the second bearing 32 is not particularly limited. As the type of the first bearing 31 and the second bearing 32, for example, rolling bearings such as a ball bearing and a roller bearing and slide bearings using engineering plastics, a bearing alloy, and ceramics can be used. In this embodiment, a ball bearing, which is a type of the ball bearing, is used.

The first bar 14 projects piercing through the lateral member 12b. A through-hole 14d, which pierces through the first bar 14 in the radial direction, is formed at an end of the first bar 14. The first urging section 16 includes a coil spring 16a as a spring. An end of the coil spring 16a is inserted into the through-hole 14d. A recess 12d is formed on the upper surface of the lateral member 12b. An end of the coil spring 16a is inserted into the recess 12d. When the first bar 14 turns about the turning shaft 14a, torque is applied to the first bar 14 by the coil spring 16a.

A cover 16b is set to cover the coil spring 16a. The cover 16b protects the coil spring 16a to prevent an object separating from the object to be gripped 2 from adhering to the coil spring 16a. Note that a structure in which the second bar 15 is set in the lateral member 12b is the same as the structure in which the first bar 14 is set in the lateral member 12b. Therefore, explanation of the structure is omitted. Similarly, a structure in which the third bar 20 and the fourth bar 21 are set in the lateral member 13b is the same as the structure in which the first bar 14 is set in the lateral member 12b. Therefore, explanation of the structure is omitted. An internal structure of the second urging section 17, the third urging section 22, and the fourth urging section 23 is the same as the internal structure of the first urging section 16. Therefore, explanation of the internal structure is omitted.

Fig. 4B is a main part schematic sectional view showing a connection structure of the first bar and the first distal end section. As shown in Fig. 4B, the end in the -Z direction of the first bar 14 is formed in a linear shape extending along the turning shaft 14a. The end of the first bar 14 is set in the first distal end section 18 via the third bearing 33. Therefore, the first bar 14 is turnable at low frictional resistance with respect to the first distal end section 18.

A type of the third bearing 33 is not particularly limited. A bearing same as the first bearing 31 can be used. Note that a structure in which the second bar 15 is set in the first distal end section 18 is the same as the structure in which the first bar 14 is set in the first distal end section 18. Therefore, explanation of the structure is omitted. Similarly, a structure in which the third bar 20 and the fourth bar 21 are set in the second distal end section 24 is the same as the structure in which the first bar 14 is set in the first distal end section 18. Therefore, explanation of the structure is omitted.

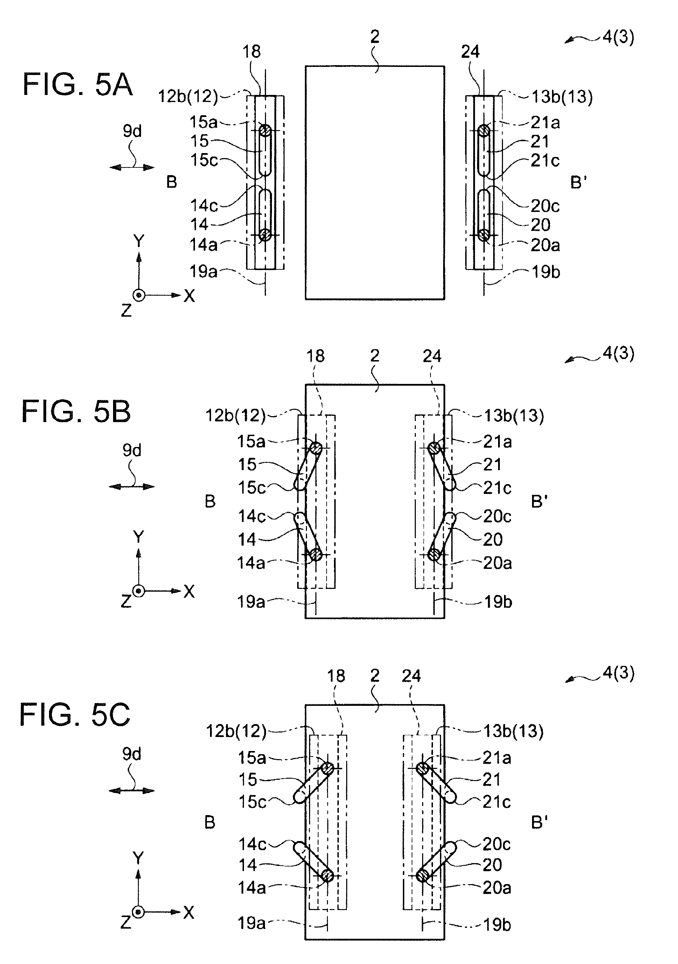

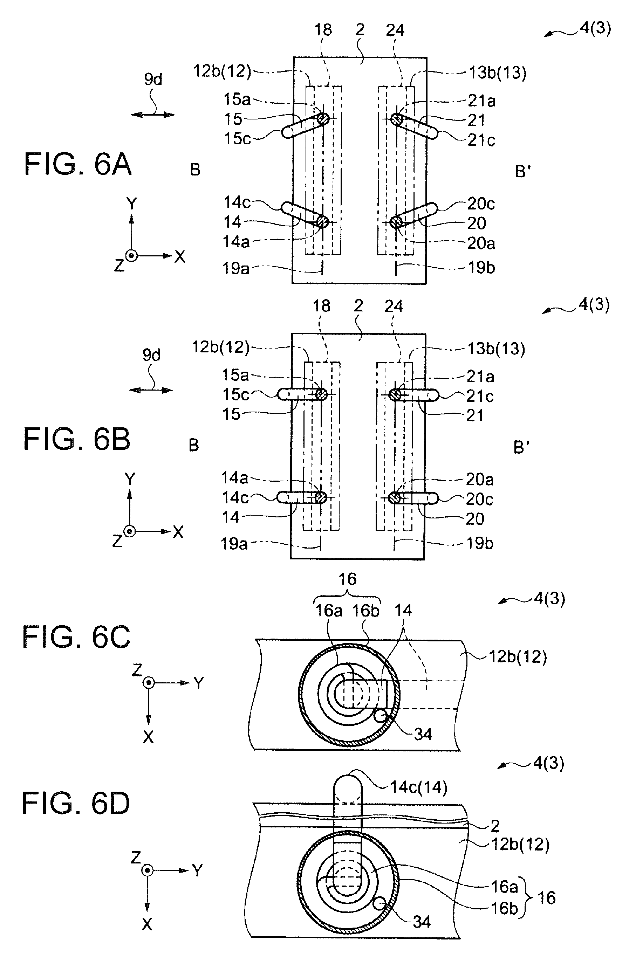

Figs. 5A to 6D are schematic diagrams for explaining motions of the first to fourth bars. Figs. 5A to 6B are diagrams viewed from a B-B' line in Fig. 2B. Fig. 5A shows a state in which the robot hand 4 does not hold the object to be gripped 2. Figs. 5B to 6A show a process until the robot hand 4 holds the object to be gripped 2. Fig. 6B shows a state in which the robot hand 4 holds the object to be gripped 2. Figs. 6C and 6D are diagrams of the first bar 14 viewed from the Z direction side of the lateral member 12b. Fig. 6C shows a state in which the robot hand 4 does not hold the object to be gripped 2. Fig. 6D shows a state in which the robot hand 4 holds the object to be gripped 2. Note that, to clearly show the figures, a surface on the Z direction side of the cover 16b is not shown in Figs. 6C and 6D. The inner side first sheet 25 and the inner side second sheet 26 are not shown in Figs. 5A to 6D.

As shown in Fig. 5A, when the robot hand 4 does not grip the object to be gripped 2, the interval between the first distal end section 18 and the second distal end section 24 in the X direction is larger than the width of the object to be gripped 2. The projecting section 14c of the first bar 14 and the projecting section 15c of the second bar 15 come close to each other and project toward the longitudinal direction of the first distal end section 18. Consequently, the first bar 14 and the second bar 15 overlap the first distal end section 18 along the same or substantially the same imaginary plane 19a when viewed from the Z direction. The first bar 14 and the second bar 15 are prevented from projecting in the X direction of the first distal end section 18. Similarly, the projecting section 20c of the third bar 20 and the projecting section 21c of the fourth bar 21 come close to each other and project toward the longitudinal direction of the second distal end section 24. Consequently, the third bar 20 and the fourth bar 21 overlap the second distal end section 24 along the same or substantially the same imaginary plane 19b when viewed from the Z direction. The third bar 20 and the fourth bar 21 are prevented from projecting in the X direction of the second distal end section 24.

As shown in Fig. 5B, the position changing section 9 moves the first base section 12 and the second base section 13 to reduce the interval between the first bar 14 and the second bar 15 and the interval between the third bar 20 and the fourth bar 21. Consequently, in the first bar 14, the projecting section 14c is pushed by the object to be gripped 2 and turns about the turning shaft 14a. Similarly, the second bar 15, the third bar 20, and the fourth bar 21 respective turn about the turning shaft 15a, the turning shaft 20a, and the turning shaft 21a. The first bar 14 and the second bar 15 move away from the imaginary plane 19a. The third bar 20 and the fourth bar 21 move away from the imaginary plane 19b. The first distal end section 18 and the second distal end section 24 move toward the center of the object to be gripped 2 when viewed from the Z direction.

As shown in Figs. 5C and 6A, the position changing section 9 further moves the first base section 12 and the second base section 13 to reduce the interval between the first bar 14 and the second bar 15 and the interval between the third bar 20 and the fourth bar 21. Consequently, the projecting section 14c is pressed by the object to be gripped 2 and the first bar 14 turns about the turning shaft 14a. Similarly, the second bar 15, the third bar 20, and the fourth bar 21 respectively turn about the turning shaft 15a, the turning shaft 20a, and the turning shaft 21a. The first distal end section 18 and the second distal end section 24 move toward the center of the object to be gripped 2 when viewed from the Z direction.

As shown in Fig. 6B, the position changing section 9 further moves the first base section 12 and the second base section 13 to reduce the interval between the first bar 14 and the second bar 15 and the interval between the third bar 20 and the fourth bar 21. The projecting section 14c of the first bar 14 and the projecting section 15c of the second bar 15 are pressed by the object to be gripped 2 and project toward a direction away from the lateral member 12b. The first distal end section 18 enters the bottom of the object to be gripped 2 when viewed from the Z direction.

Similarly, the projecting section 20c of the third bar 20 and the projecting section 21c of the fourth bar 21 are pressed by the object to be gripped 2 and project toward a direction away from the lateral member 13b. The second distal end section 24 enters the bottom of the object to be gripped 2 when viewed from the Z direction. Consequently, the interval between the first distal end section 18 and the second distal end section 24 is smaller than the width of the object to be gripped 2. Therefore, the object to be gripped 2 can be supported by the first distal end section 18, the second distal end section 24, the inner side first sheet 25, and the inner side second sheet 26.

Subsequently, when the robot hand 4 releases the object to be gripped 2, the position changing section 9 moves the first base section 12 and the second base section 13 and increases the interval between the first base section 12 and the second base section 13. In this case, the first bar 14, the second bar 15, the third bar 20, and the fourth bar 21 turn in order indicated by in Figs. 6B, 6A, 5C, 5B, and 5A.

As a result, as shown in Fig. 5A, the first distal end section 18 and the second distal end section 24 move away from the object to be gripped 2 when viewed from the Z direction. The projecting section 14c of the first bar 14 and the projecting section 15c of the second bar 15 come close to each other and project toward the longitudinal direction of the first distal end section 18. The first bar 14 and the second bar 15 overlap the first distal end section 18 along the same or substantially the same plane when viewed from the Z direction. Similarly, the projecting section 20c of the third bar 20 and the projecting section 21c of the fourth bar 21 come close to each other and project toward the longitudinal direction of the second distal end section 24. Consequently, the third bar 20 and the fourth bar 21 overlap the second distal end section 24 along the same or substantially the same plane when viewed from the Z direction. The third bar 20 and the fourth bar 21 are prevented from projecting in the X direction of the second distal end section 24.

As shown in Fig. 6C, a regulating pin 34 is set near the coil spring 16a on the surface on the Z direction side of the lateral member 12b. The first bar 14 is bent at a right angle in a place near the end on the -Z direction side. The first bar 14 is urged by the coil spring 16a to turn clockwise in the figure. When the first bar 14 is not in contact with the object to be gripped 2, a side surface near the end of the first bar 14 comes into contact with the regulating pin 34. The first bar 14 is regulated not to turn by the regulating pin 34. With this structure, the projecting section 14c of the first bar 14 faces the longitudinal direction of the first distal end section 18.

As shown in Fig. 6D, when the first bar 14 comes into contact with the object to be gripped 2, the first bar 14 moves away from the regulating pin 34. When the object to be gripped 2 moves in the -X direction in the figure, the first bar 14 pushed by the object to be gripped 2 and turns counterclockwise. When the object to be gripped 2 moves in the X direction, the first bar 14 is urged by the coil spring 16a and turns clockwise.

The structure of second urging section 17, the third urging section 22, and the fourth urging section 23 is the same as the structure of the first urging section 16. The turning of the second bar 15, the third bar 20, and the fourth bar 21 is regulated in the same manner as the turning of the first bar 14. The motions of the urging sections and the bars are the same as the motions of the first urging section 16 and the first bar 14. Therefore, detailed explanation is omitted.

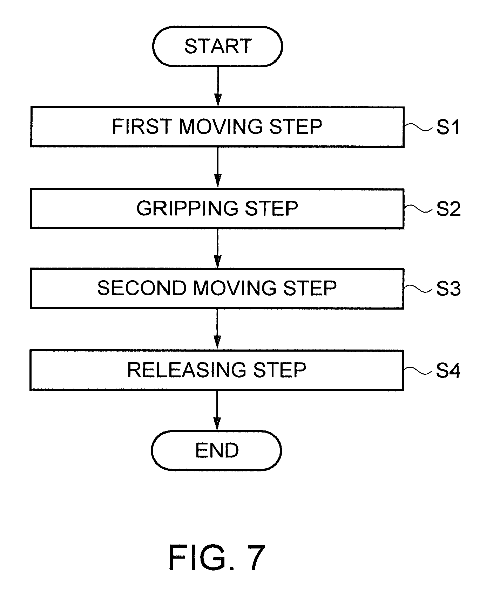

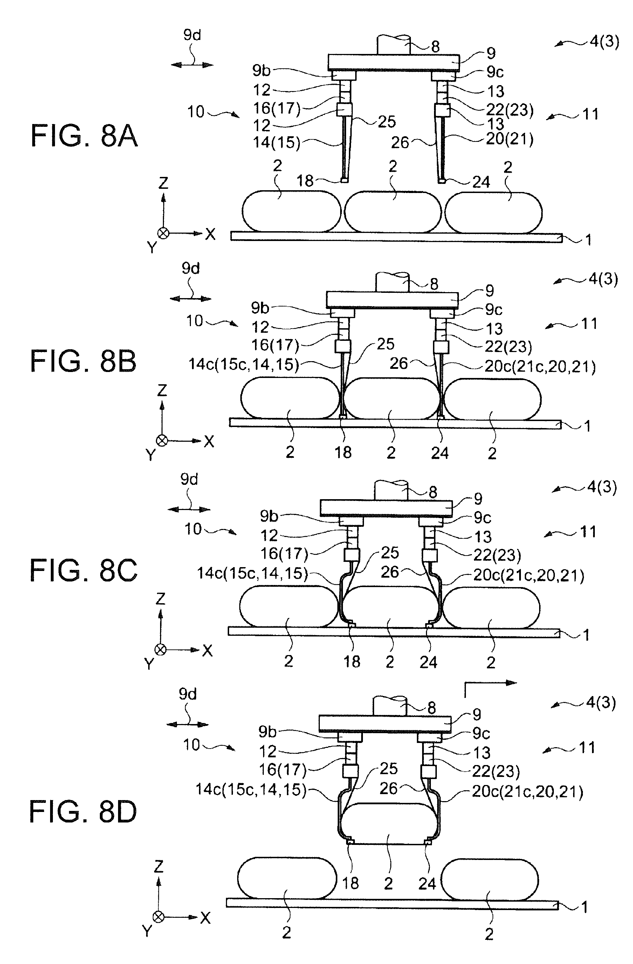

A method of holding and moving the object to be gripped 2 using the robot 3 is explained with reference to Figs. 7 to 9D. Fig. 7 is a flowchart for explaining a method of moving an object to be gripped. Figs. 8A to 9D are schematic diagrams for explaining the method of moving the object to be gripped.

In Fig. 7, step S1 is equivalent to the first moving step. In this step, the first to fourth urging sections 16 to 23 urges the first to fourth bars 14 to 21. The first bar 14 and the second bar 15 extend along the same or substantially the same plane. The third bar 20 and the fourth bar 21 extend along the same or substantially the same plane. The step is a step of moving the robot hand 4 to locate the object to be gripped 2 between the first holding section 10 and the second holding section 11. Processing shifts to step S2. Step S2 is equivalent to the gripping step. In this step, the position changing section 9 moves the first holding section 10 and the second holding section 11. The position changing section 9 presses the first to fourth bars 14 to 21 against the object to be gripped 2 via the inner side first sheet 25 and the inner side second sheet 26. The step is a step of turning the first to fourth bars 14 to 21 with reaction from the object to be gripped 2 and causing the first to fourth bars 14 to 21 and the inner side first sheet 25 and the inner side second sheet 26 to grip to wrap the object to be gripped 2. The processing shifts to step S3.

Step S3 is equivalent to the second moving step. This step is a step of moving the robot hand 4 that holds the object to be gripped 2. The processing shifts to step S4. Step S4 is equivalent to the releasing step. In this step, the position changing section 9 moves the first holding section 10 and the second holding section 11 and increases the distance between the first holding section 10 and the second holding section 11. In the step, the position changing section 9 separates the inner side first sheet 25 and the inner side second sheet 26 from the object to be gripped 2 and ends the holding of the object to be gripped 2. The step of moving the object to be gripped 2 ends.

The method of moving the object to be gripped 2 is explained in detail with reference to Figs. 8A to 9D while being associated with the steps shown in Fig. 7. Figs. 8A and 8B are diagrams corresponding to the first moving step in step S1. As shown in Fig. 8A, in step S1, three objects to be gripped 2 are arranged on the placing table 1. Note that the placing table 1 and the object to be gripped 2 shown in the figure are only a part of the placing table 1 and a large number of objects to be gripped 2 placed on the placing table 1. Position accuracy of places where the objects to be gripped 2 are arranged is low. Intervals among the objects to be gripped 2 vary.

The robot 3 moves the robot hand 4 to a place opposed to the object to be gripped 2. The interval between the first distal end section 18 and the second distal end section 24 is set larger than the length in the X direction of the object to be gripped 2. The interval between the first distal end section 18 and the second distal end section 24 may be set with reference to fixed dimensions of the object to be gripped 2. Besides, an image pickup apparatus and an image processing apparatus may be set in the robot 3. The image processing apparatus measures dimensions of the objects to be gripped 2 using an image photographed by the image pickup apparatus. The interval between the first distal end section 18 and the second distal end section 24 may be set with reference to the measured dimensions. This method can deal with a plurality of kinds of objects to be gripped 2.

As shown in Fig. 8B, subsequently, the robot 3 lowers the robot hand 4 and brings the first distal end section 18 and the second distal end section 24 close to the placing table 1. It is preferable to bring the first distal end section 18 and the second distal end section 24 close to the placing table 1 not to come into contact with the placing table 1. The position changing section 9 can move the first holding section 10 and the second holding section 11 with a small force when the first holding section 10 and the second holding section 11 do not come into contact with the placing table 1 compared with when the first holding section 10 and the second holding section 11 come into contact with the placing table 1. However, in some case, claw structures are provided in the first distal end section 18 and the second distal end section 24. In that case, claws are brought into contact with a setting table and slid on the setting table to hold the object to be gripped 2.

The first to fourth urging sections 16 to 23 respectively urge the first to fourth bars 14 to 21. Therefore, the projecting section 14c of the first bar 14 projects in the Y direction and the projecting section 15c of the second bar 15 projects in a -Y direction. Consequently, the first to fourth bars 14 to 21 extend on the same or substantially the same plane. Therefore, since the width in the X direction of the first bar 14 and the second bar 15 is small, it is easy to insert the first bar 14 and the second bar 15 into a gap between the objects to be gripped 2 adjacent to each other. The third bar 20 and the fourth bar 21 are in the same state as the first bar 14 and the second bar 15. Therefore, it is easy to insert the third bar 20 and the fourth bar 21 into the gap between the adjacent objects to be gripped 2.

Fig. 8C is a diagram corresponding to the gripping step of step S2. As shown in Fig. 8C, in step S2, the position changing section 9 brings the first base section 12 and the second base section 13 close to each other. Consequently, in the first holding section 10, the projecting section 14c and the projecting section 15c are pushed by the object to be gripped 2 and project in the -X direction. Similarly, in the second holding section 11, the projecting section 20c and the projecting section 21c are pushed by the object to be gripped 2 and project in the X direction. The first distal end section 18 and the second distal end section 24 enter between the placing table 1 and the object to be gripped 2.

Further, the inner side first sheet 25 and the inner side second sheet 26 come into contact with each other to hold the object to be gripped 2. Since the inner side first sheet 25 and the inner side second sheet 26 have elasticity, the inner side first sheet 25 and the inner side second sheet 26 press the side surfaces of the object to be gripped 2 and hold the object to be gripped 2.

In the robot hand 4, the first distal end section 18 and the second distal end section 24 support the bottom of the object to be gripped 2. The inner side first sheet 25 and the inner side second sheet 26 hold the side surfaces of the object to be gripped 2. Therefore, the robot 3 can lift the object to be gripped 2 in a state in which the robot hand 4 stably holds the object to be gripped 2.

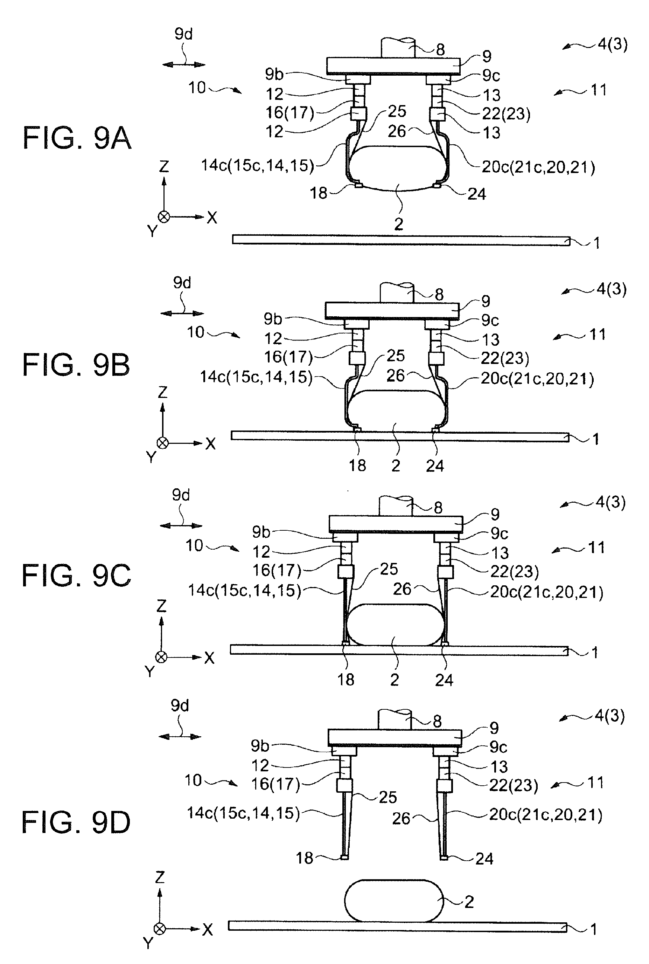

Figs. 8D to 9B are diagrams corresponding to the second moving step of step S3. As shown in Fig. 8D, in step S3, the robot 3 drives the lifting and lowering mechanism 6 to lift the robot hand 4. Subsequently, as shown in Fig. 9A, the robot 3 moves the robot hand 4 and the object to be gripped 2 in the horizontal direction. The robot 3 moves the object to be gripped 2 to a place opposed to a moving destination place of the object to be gripped 2. Subsequently, as shown in Fig. 9B, the robot 3 drives the lifting and lowering mechanism 6 to lower the robot hand 4. The robot 3 places the object to be gripped 2 on the placing table 1 at the moving destination.

Figs. 9C to 9D are diagrams corresponding to the releasing step of step S4. As shown in Fig. 9C, the position changing section 9 moves the first holding section 10 and the second holding section 11 and increases the distance between the first holding section 10 and the second holding section 11. The position changing section 9 separates the inner side first sheet 25 and the inner side second sheet 26 from the object to be gripped 2. Since the first to fourth urging sections 16 to 23 urge the first to fourth bars 14 to 21, the projecting section 14c of the first bar 14 and the projecting section 20c of the third bar 20 project in the Y direction and the projecting section 15c of the second bar 15 and the projecting section 21c of the fourth bar 21 project in the -Y direction. Consequently, the first to fourth bars 14 to 21 extend along the same or substantially the same plane.

Subsequently, as shown in Fig. 9D, the robot 3 drives the lifting and lowering mechanism 6 to lift the robot hand 4 and stays on standby. The step of moving the object to be gripped 2 ends.

As explained above, according to this embodiment, there are effects explained below.
(1) According to this embodiment, in the first holding section 10, the first bar 14 and the second bar 15 support the first distal end section 18 and the third bar 20 and the fourth bar 21 support the second distal end section 24. The object to be gripped 2 pushes the first to fourth bars 14 to 21 via the inner side first sheet 25 and the inner side second sheet 26. The first to fourth bars 14 to 21 turn. The object to be gripped 2 enters between the first base section 12 and the first distal end section 18. The first distal end section 18 is located between the object to be gripped 2 and the placing table 1. Similarly, in the second holding section 11, the second distal end section 24 is located between the object to be gripped 2 and the placing table 1. Consequently, since the robot hand 4 supports the bottom of the object to be gripped 2, it is possible to stably hold the object to be gripped 2.
(2) According to this embodiment, in the first holding section 10, the inner side first sheet 25 is set between the lateral member 12b and the first distal end section 18. In the second holding section 11, the inner side second sheet 26 is set between the lateral member 13b and the second distal end section 24. The sheets are located between the object to be gripped 2 and the bars. When the position changing section 9 brings the holding sections close to the object to be gripped 2, the sheets come into contact with the object to be gripped 2. The first distal end section 18 and the second distal end section 24 are located under the object to be gripped 2. The sheets come into contact with the bottom to the side surfaces of the object to be gripped 2. Consequently, since the robot hand 4 supports the bottom and the side surfaces of the object to be gripped 2, it is possible to stably hold the object to be gripped 2.
(3) According to this embodiment, the first to fourth urging sections 16 to 23 urge the bars to turn. When the first to fourth bars 14 to 21 are not in contact with the object to be gripped 2, the bars are caused to extend along the same plane by the regulating pin 34 and the urging sections. Consequently, like the bars, the first distal end section 18, the second distal end section 24, the inner side first sheet 25, and the inner side second sheet 26 extend along the same plane. In the holding sections, portions formed by the bars, the distal end sections, and the sheets are thin. Therefore, even when the gap between the objects to be gripped 2 adjacent to each other is small, it is possible to insert the holding sections into the small gap. The position changing section 9 changes the positions of the holding sections. Therefore, the robot hand 4 can hold the objects to be gripped. As a result, even when the gap between the adjacent object to be gripped 2 is small, the robot hand 4 can hold the objects to be gripped 2.
(4) According to this embodiment, in the first holding section 10, the lateral member 12b includes the first bearing 31 and the second bearing 32 that turnably supports the first bar 14. Since the first bearing 31 and the second bearing 32 supports the first bar 14 in two places, the robot hand 4 can accurately turn the first bar 14 about the turning shaft 14a. Note that the same effect is attained in the second bar 15, the third bar 20, and to forth bar 21. As a result, the first to forth bars 14 to 21 can be stably turned with a small force.
(5) According to this embodiment, the coil spring 16a of the first urging section 16 urges the first bar 14. The coil spring 16a can urge the first bar 14 with a force having high reproducibility. Therefore, the first urging section 16 can urge the first bar 14 with high reproducibility such that the first bar 14 extends along the same plane. Note that the same effect is attained in the second urging section 17, the third urging section 22, and to fourth urging section 23.
(6) According to this embodiment, the first bearing 31, the second bearing 32, and the third bearing 33 are arranged on the turning shaft 14a. Therefore, the first bar 14 can be turned by a small force. The same effect is attained in the second bar 15, the third bar 20, and the fourth bar 21.

### Softness measurement of an object to be gripped

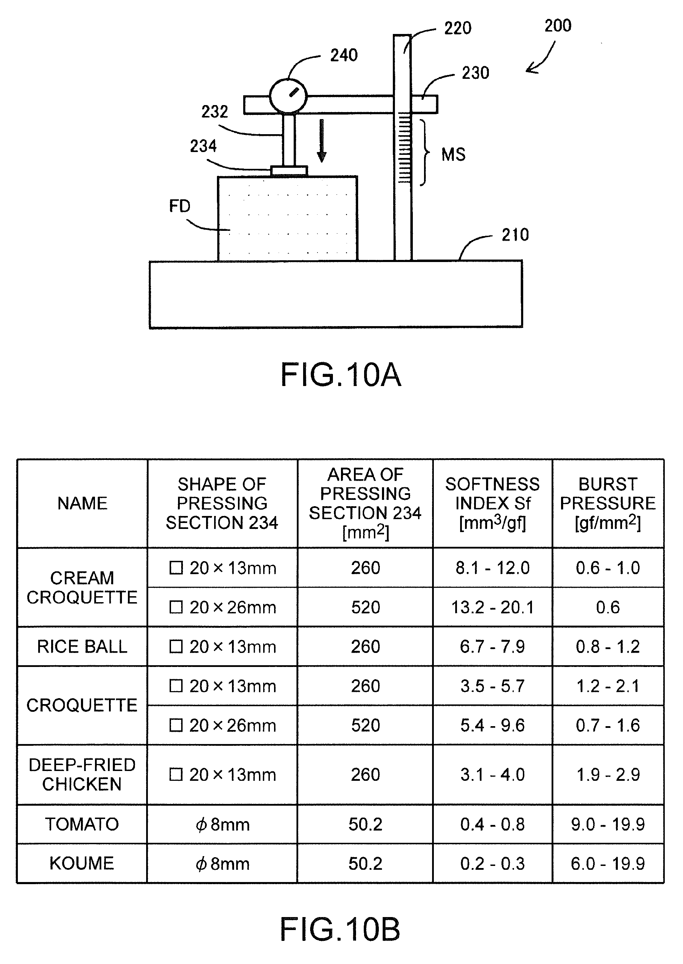

Fig. 10A is a schematic diagram showing the configuration of a measuring apparatus that measures a softness index Sf of an object to be gripped. Fig. 10B shows measurement results of various kinds of food, which are objects to be gripped. A measuring apparatus 200 includes a columnar section 220 provided along the vertical direction on a base 210 and a beam section 230 movably coupled to the columnar section 220. A supporting bar 232 extending in the vertical direction is coupled to the beam section 230. A pressing section 234 is fixed to the lower end of the supporting bar 232. A force sensor 240 that measures a force applied to the pressing section 234 is provided at the upper end of the supporting bar 232. A distance scale MS is provided in the columnar section 220.

A tester places a sample FD on the base 210 and pushes down the beam section 230 to thereby press down the pressing section 234 onto the sample FD. A downward moving distance of the beam section 230 is measured by the tester reading the distance scale MS provided in the columnar section 220. The distance is used as a value indicating displacement of the sample FD by the pressing. A force applied to the sample FD from the pressing section 234 is measured by the force sensor 240.

In Fig. 10B, a name of the sample FD, a shape and dimension of the pressing section 234, an area of the pressing section 234, a measurement result of the softness index Sf, and a measurement result of a burst pressure are shown. In this test, as the sample FD, six kinds of food, i.e., a cream croquette, a rice ball, a croquette, a deep-fried chicken, a tomato, and a koume (Japanese small ume) were used. In the field of the shape of the pressing section 234, a white square indicates that the pressing section 234 has a rectangular shape. For example, "□20×13mm" indicates that the shape of the pressing section 234 is a 20mm×13mm rectangle. In the field of the shape of the pressing section 234, "φ" indicates that the pressing section 234 has a circular shape. For example, "φ8mm" means that the shape of the pressing section 234 is a circle having a diameter of 8 mm. Concerning the cream croquette and the croquette, the test was performed using two kinds of rectangular pressing sections 234 having different dimensions. Test results of the softness index Sf and the burst pressure are explained below.

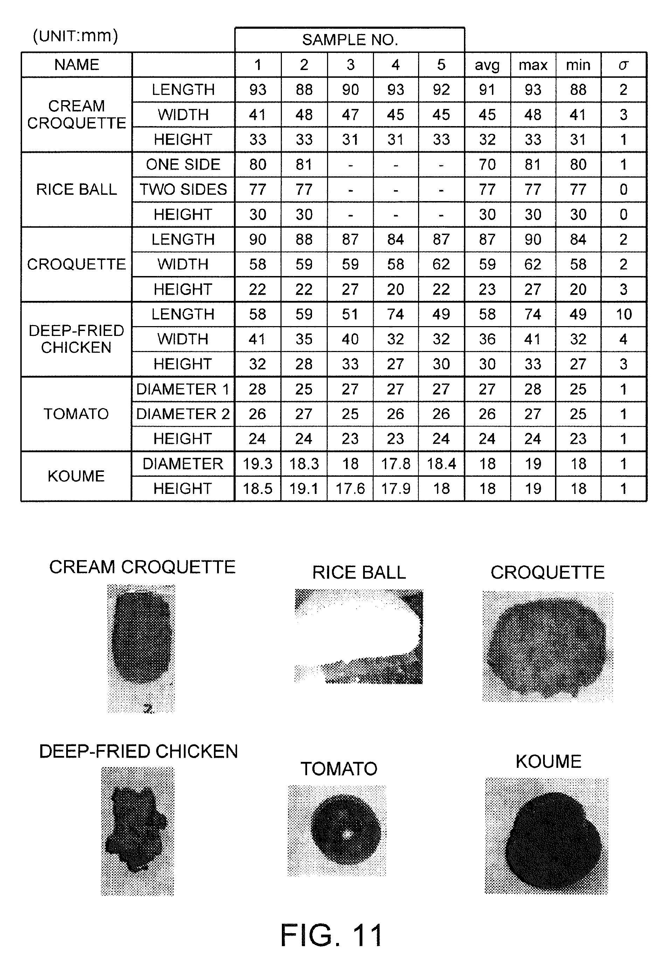

Fig. 11 shows the dimension of the sample FD shown in Fig. 10A. As the rice ball, two samples FD were used for the test. As each of the other kinds of food, five samples FD were used for the test. Photographs of the six kinds of food are illustrated under the table of Fig. 11. The cream croquette has a thick and short bar shape. The rice ball has a low substantially triangular prism shape. The croquette has a substantially elliptical plane shape and a low shape. The deep-fried chicken is a coated chicken fried in oil and has an irregular shape having a large number of protrusions. The tomato has a substantially circular plane shape and a low shape. The koume has a substantially spherical shape. At the right end of the table of Fig. 11, an average (ave), a maximum (max), a minimum (min), and a standard deviation (σ) of dimensions of a plurality of samples are shown. The dimensions (a diameter 1 and a diameter 2) of the plane shape of the tomato and the dimension (the diameter) of the plane shape of the koume are considerably small compared with the other kinds of food. Therefore, concerning these food samples, as shown in Fig. 10B, the pressing section 234 having a small size with a diameter of 8 mm was used. Concerning the other kinds of food, since the plane shapes are larger than the plane shapes of the tomato and the koume, the test was performed using the pressing section 234 having a larger area. As the pressing section 234, it is preferable to use a pressing section having a surface area equal to or smaller than 20% of the surface area of the sample FD. Then, since the pressing section 234 sufficiently small compared with the sample FD can be used, it is possible to obtain stable values as the softness index Sf. Note that the "surface area of the sample FD" means an area of a shape obtained by projecting the sample FD on the base 210.

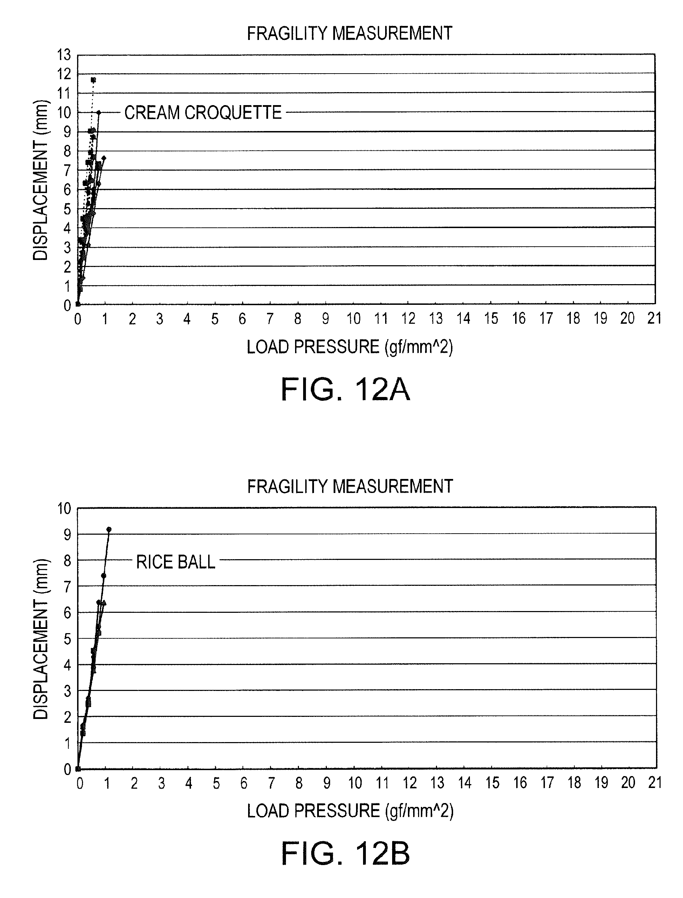

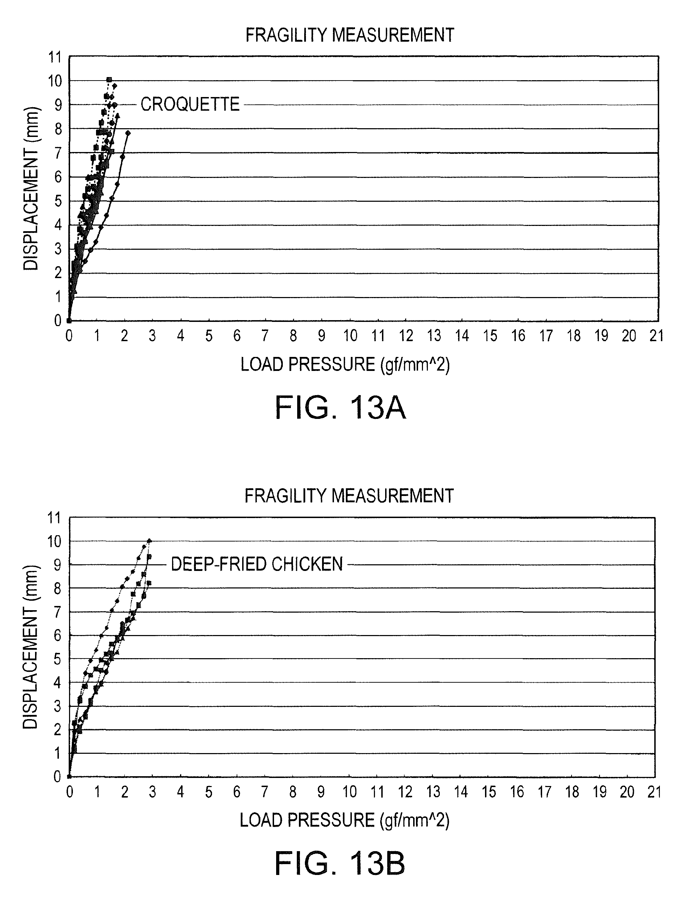

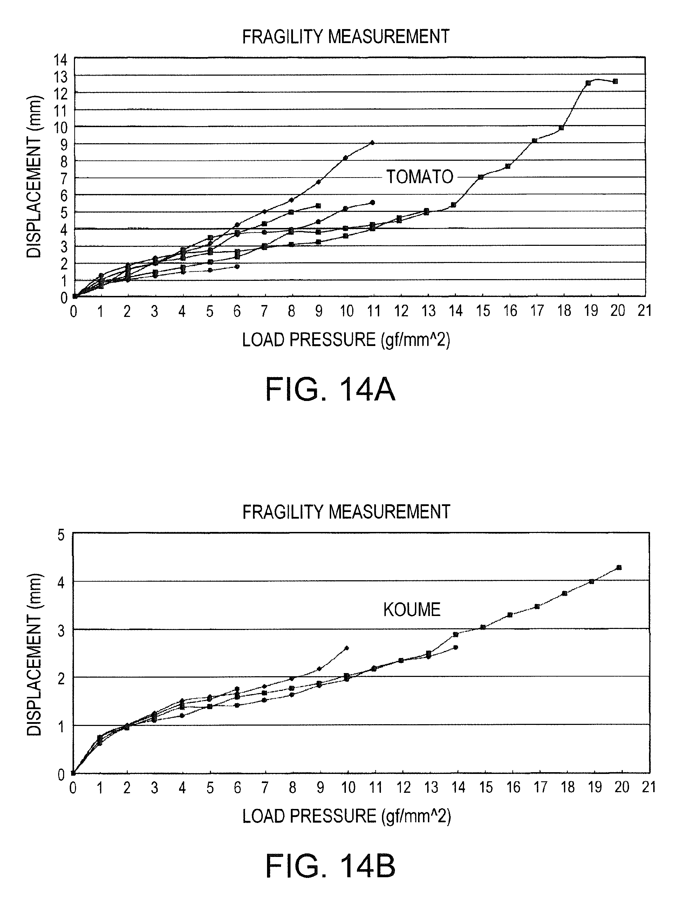

Figs. 12A to 14B are graphs showing results of the softness test carried out concerning the six kinds of food (also referred to as "fragility measurement") . In the figures, the abscissa indicates a load pressure [gf/mm²] and the ordinate indicates displacement [mm]. Note that "the load pressure" is a value obtained by dividing a force measured by the force sensor 240 by the area of the pressing section 234. That is, the "load pressure" is a pressure applied to the sample FD from the pressing section 234. The "displacement" is a moving distance of the pressing section 234 (a distance the pressing section 234 pushes the sample FD) read from the distance scale MS provided in the columnar section 220.

For example, in Fig. 12A, concerning a plurality of samples (Fig. 11) of the cream croquette, a relation between the load pressure and the displacement is plotted. The test was ended at a point when the pressing section 234 caused damage to the surface structures of the samples. A load pressure at this end point was defined as "burst pressure". Plots concerning the respective samples were approximated by straight lines passing the origin. Tilts of the straight lines were calculated as the "softness index Sf". Large softness index Sf means that the displacement with respect to a unit amount of the load pressure is large. Therefore, the softness index Sf is suitable as an index representing softness of an object to be gripped. Note that, in Figs. 12A to 14B, as the tilts of the plots are larger, the softness index Sf is larger and the samples are softer. The "softness index Sf" and the "burst pressure" in the table of Fig. 10B are values obtained in this way. The same applies to the samples other than the cream croquette.

Note that the definition of the damage to the surface structure of the sample FD is different according to the types of the samples. For example, concerning the cream croquette, the croquette, and the deep-fried chicken, occurrence of a tear in coats thereof was regarded as the "breakage of the surface structure". Concerning the rice ball, occurrence of a crack on the surface of continuous grains of rice was regarded as the "breakage of the surface structure". Concerning the tomato and the koume, occurrence of a tear in rinds thereof was regarded as the "breakage of the surface structure".

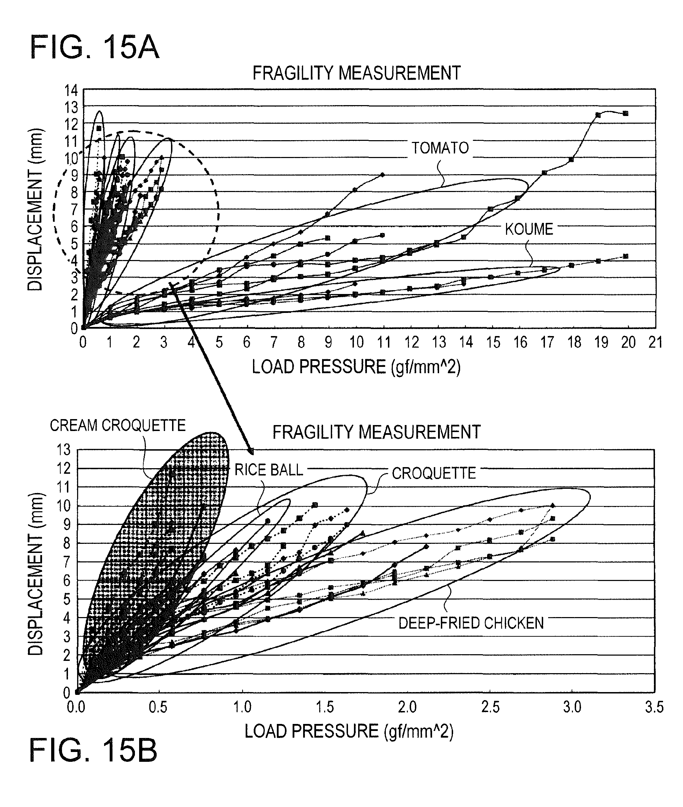

Fig. 15A is a diagram in which the results of Figs. 12A to 14B are plotted one on top of another. Fig. 15B is an enlarged diagram of the plots concerning the relatively soft four kinds of food. The softness index Sf of the six kinds of food is large in the order of the cream croquette, the rice ball, the croquette, the deep-fried chicken, the tomato, and the koume. This can also be understood from the table of Fig. 10B. Concerning the six kinds of food, as the softness index Sf is larger, the burst pressure tends to be smaller. In other words, these kinds of food are more easily damaged as these kinds of food are softer. This is assumed to be tendency common to many kinds of food.

The robot hand 4 explained in the first embodiment was able to stably grip the plurality of samples (objects to be gripped) different in the size and the softness index Sf shown in Figs. 10A to 15B without damaging the samples. The softness index Sf of the objects to be gripped is in a wide range of 0.2 mm³/gf to 20.1 mm³/gf as shown in Fig. 10B. In particular, when soft objects to be gripped having the softness index Sf exceeding 5 mm³/gf (in the example shown in Fig. 10B, the cream croquette, the rice ball, and the croquette) were gripped by the robot hand in the past, the objects to be gripped were likely to be damaged. When the robot hand was configured to be capable of gripping the objects to be gripped having the softness index Sf exceeding 5 mm³/gf, the robot hand was likely to be unable to successfully grip hard objects to be gripped having the softness index Sf smaller than 1 mm³/gf (in the example shown in Fig. 10B, the tomato, the koume, and the like) and drop the objects to be gripped. On the other hand, the robot hand 4 in the first embodiment was able to be stably grip all of these objects to be gripped. Note that, when the robot hand 4 in the first embodiment grips these plurality of different kinds of objects to be gripped, there is an advantage that it is possible to grip the respective objects to be gripped without changing the structure of the robot hand 4.

A range of the softness index Sf of objects to be gripped suitable for the robot hand (the gripping apparatus) can be set in various ranges. For example, the robot hand (the gripping apparatus) may be configured to be capable of stably gripping objects to be gripped having any one of conditions explained below without damaging the objects to be gripped.

### Condition 1 for objects to be gripped

A plurality of different kinds of objects to be gripped having the softness index Sf in at least a range of 3 mm³/gf to 10 mm³/gf, the plurality of kinds of objects to be gripped having different levels of softness (i.e., having different softness indexes). In this case, it is preferable to use the pressing section 234 having a surface area of approximately 260 mm².

### Condition 2 for objects to be gripped

A plurality of different kinds of objects to be gripped having the softness index Sf in at least a range of 0.5 mm³/gf to 10 mm³/gf, the plurality of kinds of objects to be gripped having different levels of softness (i.e., having different softness indexes). In this case, it is preferable to use the pressing section 234 having a surface area of approximately 260 mm² or approximately 50 mm².

### Condition 3 for objects to be gripped

A plurality of different kinds of objects to be gripped having the softness index Sf in at least a range of 0.2 mm³/gf to 20 mm³/gf, the plurality of kinds of objects to be gripped having different levels of softness (i.e., having different softness indexes). In this case, it is preferable to use the pressing section 234 having a surface area of approximately 520 mm², approximately 260 mm², or approximately 50 mm².

If the robot hand (the gripping apparatus) is configured to be capable of gripping the objects to be gripped satisfying any one of the conditions 1 to 3, it is possible to grip, using the same robot hand (gripping apparatus), objects to be gripped having various levels of softness ranging from a relatively soft object to be gripped to a relative hard object to be gripped.

### Second Embodiment

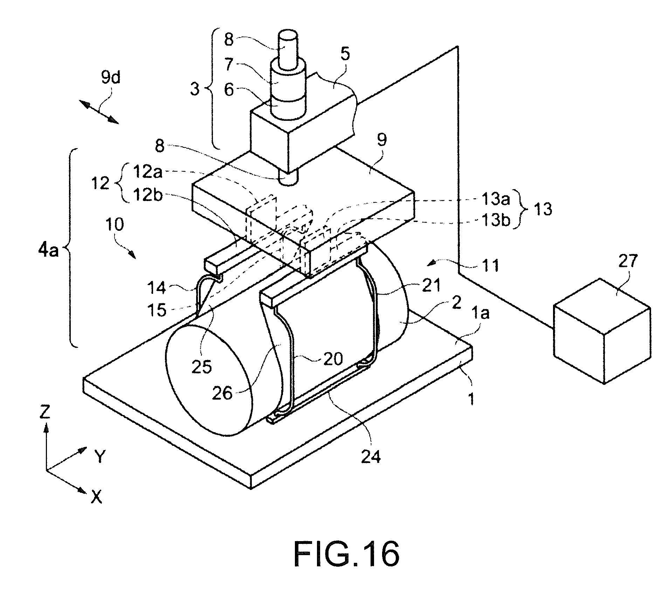

Fig. 16 is a diagram showing the configuration of a robot hand 4a in a second embodiment and is a diagram corresponding to Fig. 2A in the first embodiment. The robot hand 4a in the second embodiment is different from the robot hand 4 in the first embodiment only in two points, i.e., the first urging section 16, the second urging section 17, the third urging section 22, and the fourth urging section 23 (also referred to as urging sections 16, 17, 22, and 23) are omitted and the four bars (the first bar 14, second bar 15, third bar 20 and fourth bar 21) are respectively fixed in positions on the rear side of the inner side first sheet 25 and the inner side second sheet 26 (also referred to as sheets 25 and 26). That is, the four bars (the first bar 14, second bar 15, third bar 20 and fourth bar 21) in the second embodiment are fixed in a state in which the bars are retracted most in the first embodiment (i.e. , a state in which curved portions of the bars are arranged in a direction substantially orthogonal to the surfaces of the sheets 25 and 26). Explanation is omitted concerning similarities to the first embodiment.

The robot hand 4a in the second embodiment attains effects substantially the same as the effects of the robot hand 4 in the first embodiment. In particular, in the robot hand 4a in the second embodiment, as in the robot hand 4 in the first embodiment, the fixed distance is maintained between the first base section 12 and the second base section 13 functioning as first fixing sections and the first distal end section 18 and the second distal end section 24 functioning as second fixing sections. Therefore, a gripping force is generated by deformation of the sheets 25 and 26 functioning as film-like members. That is, the sheets 25 and 26 are deformed with an appropriate deformation amount corresponding to the softness and the size of an object to be gripped. Therefore, it is possible to stably grip the object to be gripped without damaging the object to be gripped. Further, it is possible to stably grip the plurality of different kinds of objects to be gripped satisfying any one of the conditions 1 to 3 for objects to be gripped without damaging the objects to be gripped.

### Third Embodiment

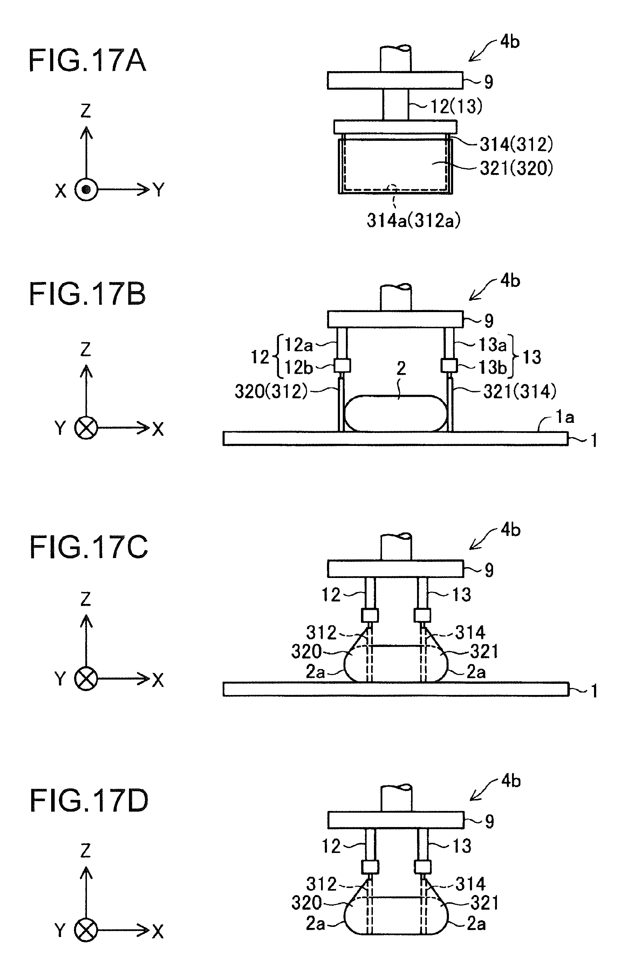

Figs. 17A to 17D are diagrams showing the configuration of a robot hand 4b in a third embodiment. This embodiment is different from the first embodiment in that an elastic member is formed in a bag shape and that a frame-like structure material is provided in the bag-like elastic member. Note that explanation is omitted concerning similarities to the first embodiment.

As shown in Fig. 17A, placing sections 312 and a pressing section 320 are set on the -Z side of the first base section 12. The placing sections 312 are formed using round bars. A square frame is formed by the lateral member 12b of the first base section 12 and the placing sections 312. The placing sections 312 have strength enough for not being easily deformed even if the placing sections 312 enter between the placing table 1 and the obj ect to be gripped 2. A bottom section 312a located on the -Z direction side of the placing sections 312 is formed in a linear shape and is parallel to the plane 1a. Consequently, it is possible to move the placing sections 312 along the plane 1a. Therefore, it is possible to easily move the placing sections 312 between the object to be gripped 2 and the plane 1a. Another set of placing sections 314 has a structure same as the structure of the placing sections 312.

The pressing section 320 and the pressing section 321 are formed of bag-like elastic members having square exteriors. That is, in this embodiment, the pressing section 320 is set to cover the placing sections 312. The pressing section 321 is set to cover the placing sections 314. The pressing section 320 and the pressing section 321 are formed in a square bag shape in the exteriors and are formed mainly using an elastic material. The elastic material used for the pressing section 320 and the pressing section 321 is not particularly limited. As the elastic material, silicon rubber, a material obtained by adding various additives to natural rubber, synthetic rubber, and the like can be used. In this embodiment, for example, silicone rubber is used as the elastic material.

The pressing section 320 and the pressing section 321 have elasticity. The placing sections 312 are inserted into the stretched pressing section 320, whereby the pressing section 320 is set in the placing sections 312. In the pressing section 321, the placing sections 314 are inserted into the stretched pressing section 321, whereby the pressing section 321 is set in the placing sections 314.

As shown in Fig. 17B, a robot moves the robot hand 4b. The robot hand 4b is moved to locate the object to be gripped 2 between the placing sections 312 and the placing sections 314. The placing sections 312 and the placing sections 314 are moved to places in contact with the plane 1a.

Subsequently, as shown in Fig. 17C, the position changing section 9 (the interval adjusting section) reduces the interval between the placing sections 312 and the placing sections 314. The placing sections 312 and the placing sections 314 advance between the placing table 1 and the object to be gripped 2. The object to be gripped 2 is placed on the placing sections 312 and the placing sections 314. Since the pressing section 320 and the pressing section 321 have elasticity, the pressing section 320 and the pressing section 321 are deformed along the shape of side surfaces 2a of the object to be gripped 2. The pressing section 320 and the pressing section 321 press the object to be gripped 2 from the -X direction and the X direction.

The object to be gripped 2 is equally pressed from both sides by the placing sections 312 and the placing sections 314. Therefore, the center of gravity of the object to be gripped 2 is located in the place in the center between the placing sections 312 and the placing sections 314. The side surfaces 2a on both side of the obj ect to be gripped 2 are covered with the pressing section 320 and the pressing section 321. Consequently, the robot hand 4b can stably grip the object to be gripped 2.

Subsequently, as shown in Fig. 17D, the robot lifts the robot hand 4b. The object to be gripped 2 is placed on the placing sections 312 and the placing sections 314. The side surfaces 2a on both the sides are covered with the pressing section 320 and the pressing section 321. Therefore, the robot can convey the object to be gripped 2 in a state in which the robot hand 4b stably grips the object to be gripped 2.

The object to be gripped 2 is a flexible object and is an object in a form of cream croquette, konnyaku, tofu, or agar. The object to be gripped 2 is an object that is easily deformed by being pressed and returns to the original shape when the pressing is stopped. Therefore, when the object to be gripped 2 is gripped with the opposed side surfaces 2a thereof held, the object to be gripped 2 is deformed. Therefore, the object to be gripped 2 is an object hard to be gripped.

In the robot hand 4b in the third embodiment, as in the first and second embodiments, it is possible to stably grip a plurality of different kinds of objects to be gripped satisfying any one of the conditions 1 to 3 for objects to be gripped without damaging the objects to be gripped.

### Fourth Embodiment

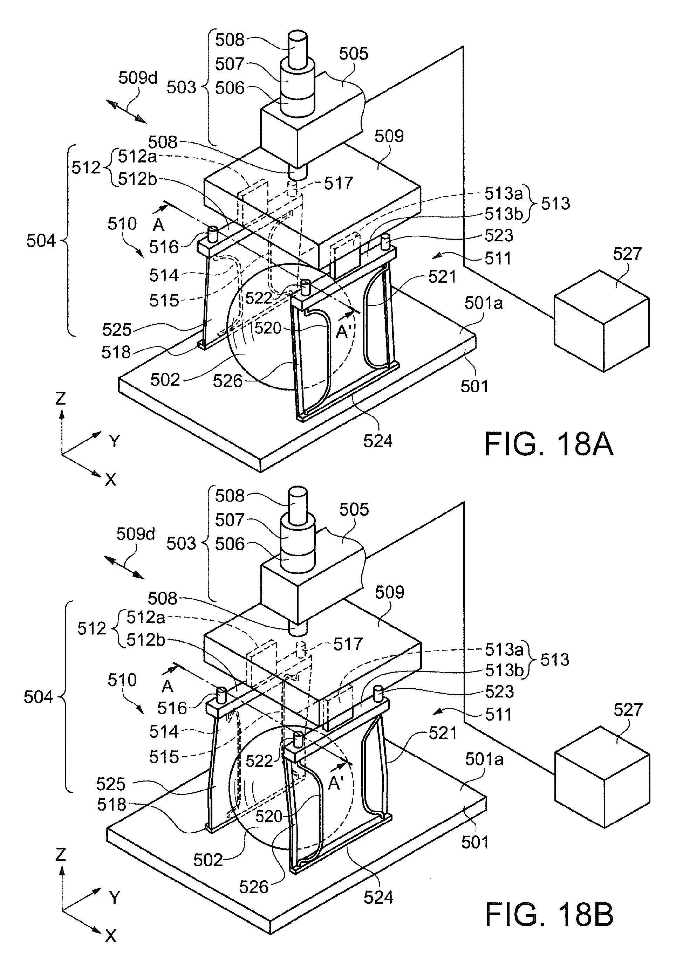

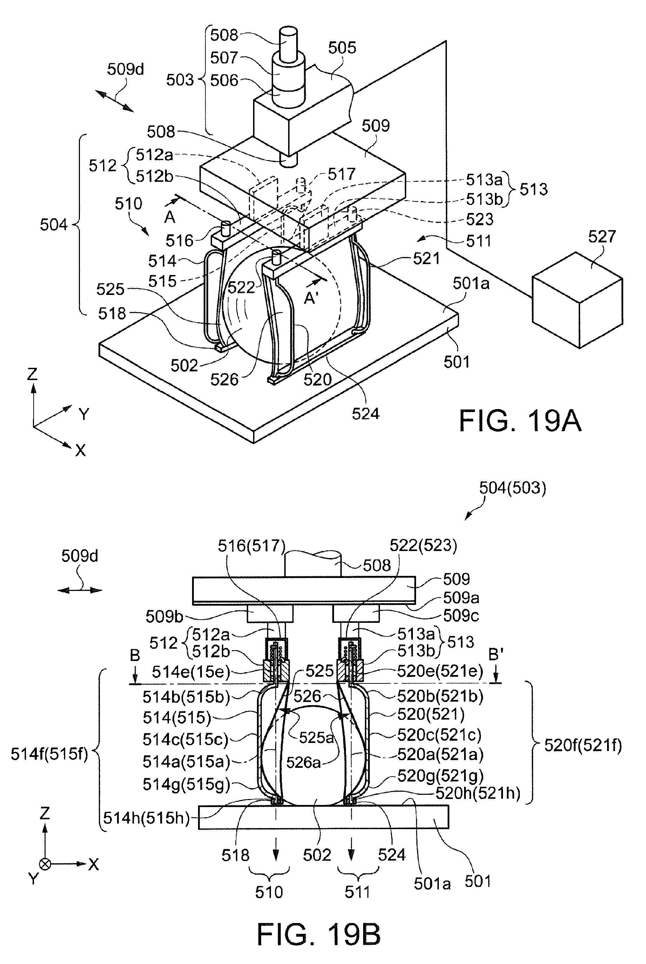

Figs. 18A to 19B are schematic perspective views showing the configuration of a gripping apparatus according to a fourth embodiment. Fig. 18A shows a state immediately before the gripping apparatus holds an object to be gripped. Fig. 18B shows a state in which the gripping apparatus comes into contact with the object to be gripped. Fig. 19A shows a state in which a robot hand holds the object to be gripped. Fig. 19B is a schematic side sectional view showing the configuration of the gripping apparatus.

As shown in Figs. 18A to 19B, an object to be gripped 502 is placed on a placing table 501 having a square tabular shape. A surface of the placing table 501 facing upward in the figures is a plane 501a. The direction of the normal of the plane 501a is a direction opposite to a direction in which gravitational acceleration acts. This direction is represented as Z direction. Directions along the plane 501a are represented as X direction and Y direction. The X direction, the Y direction, and the Z direction are directions orthogonal to one another. Note that the object to be gripped 502 is not particularly limited and may be a flexible object or may be a hardly deformable object. The object to be gripped 502 is an object such as ham, sausage, cheese, cream croquette, konnyaku, tofu, or agar. The gripping apparatus in this embodiment is suitable for gripping, in particular, konnyaku, agar, and the like, which are flexible objects having slippery surfaces. To clearly show the figures, only one object to be gripped 502 is placed on the placing table 501. However, a plurality of objects to be gripped 502 may be arrayed and set close to one another on the placing table 501.

A gripping apparatus 504 set in a robot 503 is located in the Z direction of the object to be gripped 502. The robot 503 includes an arm 505 extending in the Y direction and a not-shown driving section connected to the arm 505. The robot 503 is capable of moving the arm 505 by causing the driving section to operate.

A lifting and lowering mechanism 506 and a turning mechanism 507 are set at the distal end of the arm 505. The lifting and lowering mechanism 506 and the turning mechanism 507 turn a lifting and lowering turning shaft 508 and reciprocatingly move the lifting and lowering turning shaft 508 in the Z direction. The structures of the lifting and lowering mechanism 506 and the turning mechanism 507 are not particularly limited. In the lifting and lowering mechanism 506, a motor and a ball screw, a linear motor, a rack and a pinion, or the like can be used. For example, in this embodiment, the lifting and lowering mechanism 506 has a structure in which a motor and a ball screw are combined. The ball screw linearly moves the lifting and lowering turning shaft 508. The turning mechanism 507 has a structure in which a motor and a reduction gear are combined. The reduction gear turns the lifting and lowering turning shaft 508.

The gripping apparatus 504 is set at an end in a -Z direction of the lifting and lowering turning shaft 508. The gripping apparatus 504 includes a position changing section 509 connected to the lifting and lowering turning shaft 508. The position changing section 509 is formed in a substantially rectangular parallelepiped shape. As shown in Fig. 19B, a pair of rails 509a is set to extend in the X direction on a surface on the -Z direction side of the position changing section 509. A first stage 509b and a second stage 509c are set to be hung from the rails 509a. The first stage 509b and the second stage 509c move in ±X directions along the rails 509a. The ±X directions in which the first stage 509b and the second stage 509c move is set as a position changing directions 509d.

The position changing section 509 includes a not shown linearly moving mechanism on the inside. The linearly moving mechanism reciprocatingly moves the first stage 509b and the second stage 509c in the position hanging directions 509d. The position changing section 509 can move the first stage 509b and the second stage 509c independently from each other. The structure of the linearly moving mechanism included in the position changing section 509 is not particularly limited. A mechanism same as the lifting and lowering mechanism 506 can be used. In this embodiment, for example, the linearly moving mechanism is configured by combining a step motor and a ball screw.

On the -Z direction side of the first stage 509b, a first gripping section 510 functioning as a holding section is set to be connected to the first stage 509b. On the -Z direction side of the second stage 509c, a second gripping section 511 functioning as a holding section is set to be connected to the second stage 509c. The position changing section 509 includes a function for changing relative positions of the first gripping section 510 and the second gripping section 511 by moving the first stage 509b and the second stage 509c. Note that, in control of the relative positions, for example, a method by position control by a template set in advance, a method by gripping pressure control for performing gripping while monitoring a gripping pressure with a pressure sensor or the like can be used.

The first gripping section 510 includes a first base section 512 functioning as a first fixing section of the first gripping section 510 connected to the position changing section 509. The position changing section 509 moves the first base section 512. The first base section 512 is formed in a shape in which a rectangular parallelepiped first lateral member 512b extending in the Y direction is connected to, in the center, one end of a square bar-like longitudinal member 512a extending in the Z direction. Similarly, the second gripping section 511 includes a second base section 513 functioning as a first fixing section of the second gripping section 511 connected to the position changing section 509. The position changing section 509 moves on the second base section 513. The second base section 513 is formed in a shape in which a rectangular parallelepiped second lateral member 513b extending in the Y direction is connected to, in the center, an end of a square bar-like longitudinal member 513a extending in the Z direction. The longitudinal member 512a and the longitudinal member 513a are connected to the linear moving mechanism of the position changing section 509. The interval between the longitudinal member 512a and the longitudinal member 513a is changed by the position changing section 509.

On the -Z direction side of the first lateral member 512b, a first bar 514 functioning as a first supporting section and a second bar 515 functioning as a second supporting section extending in the -Z direction are set. The first bar 514 is set to be turnable about a turning shaft 514a extending along the Z direction. Similarly, the second bar 515 is also set to be turnable about a turning shaft 515a extending along the Z direction. The turning shaft 514a and the turning shaft 515a are orthogonal to the position changing directions 509d. The first bar 514 includes a linear section 514e functioning as a turning shaft extended to the first lateral member 512b, an arcuate section 514b extended from the linear section 514e to cross the turning shaft 514a, and a projecting section 514c extended along the turning shaft 514a. Further, the first bar 514 includes an arcuate section 514g extending in the -Z direction of the projecting section 514c and a linear section 514h turning about the turning shaft 514a connected to the arcuate section 514g. Similarly, the second bar 515 includes a linear section 515e functioning as a turning shaft extended to the first lateral member 512b, an arcuate section 515b extended from the linear section 515e to cross the turning shaft 515a, and a projecting section 515c extended along the turning shaft 515a. Further, the second bar 515 includes an arcuate section 515g extending in the -Z direction of the projecting section 515c and a linear section 515h turning about the turning shaft 515a connected to the arcuate section 515g. A first distal end section 518 functioning as a second fixing section of the first gripping section 510 is turnably fixed to the linear section 514h of the first bar 514 and the linear section 515h of the second bar 515.

On the Z direction side of the first lateral member 512b, a first urging section 516 functioning as an urging section is set in a place opposed to the first bar 514. A second urging section 517 functioning as an urging section is set in a place opposed to the second bar 515. The first urging section 516 is connected to the linear section 514e of the first bar 514 and generates torque corresponding to an angle at which the first bar 514 turns. Similarly, the second urging section 517 is connected to the linear section 515e of the second bar 515 and generates torque corresponding to an angle at which the second bar 515 turns. The first bar 514 and the second bar 515 are urged in a predetermined turning direction by the first urging section 516 and the second urging section 517.

As explained above, the first bar 514 is a bar including the two arcuate sections 514b and 514g and formed in a shape curved in a bow shape or a substantial bow shape. Both ends of the first bar 514 are formed in a linear shape and are the linear sections 514e and 514h arranged along the turning shaft 514a. A portion between the two arcuate sections 514b and 514g most distant from the turning shaft 514a is set as the projecting section 514c. In the figures (Figs. 18A to 19B) in this embodiment, the projecting section 514c is formed in a linear shape. However, the projecting section 514c may be, for example, an arcuate projecting section. Similarly, the second bar 515 is a bar including the two arcuate sections 515b and 515g and formed in a shape curved in a bow shape or a substantial bow shape. Both ends of the second bar 515 are formed in a linear shape and are the linear sections 515e and 515h arranged along the turning shaft 515a. A portion between the two arcuate sections 515b and 515g most distant from the turning shaft 515a is set as the projecting section 515c. Note that, in the figures (Figs. 18A to 19B) in this embodiment, the projecting section 515c is formed in a linear shape. However, the projecting section 515c may be, for example, an arcuate projecting section. The projecting section 514c of the first bar 514 and the projecting section 515c of the second bar 515 do not have to be formed in the same shape.

The first bar 514 and the second bar 515 are not limited in a sectional shape thereof. However, as explained below, the object to be gripped 502 is gripped by the gripping apparatus 504, whereby a gripping film 525 that comes into contact with the object to be gripped 502 comes close to and comes into contact with the first bar 514 and the second bar 515. In this case, to prevent the first bar 514 and the second bar 515 from damaging the front surface of the gripping film 525, it is preferable that the first bar 514 and the second bar 515 have a sectional shape without corners, for example, a circular sectional shape. Note that the first bar 514 and the second bar 515 may be formed by hollow tubes.

The second gripping section 511 includes a configuration same as the configuration of the first gripping section 510. On the -Z direction side of the second lateral member 513b, a third bar 520 functioning as a first supporting section and a fourth bar 521 functioning as a second supporting section of the second gripping section 511 extending in the -Z direction are set. The third bar 520 is set to be turnable about a turning shaft 520a extending along the Z direction. Similarly, the fourth bar 521 is set to be turnable about a turning shaft 521a extending long the Z direction. The turning shaft 520a and the turning shaft 521a are orthogonal to a position changing direction 509d. The third bar 520 includes a linear section 520e functioning as a turning shaft extended to the second lateral member 513b, an arcuate section 520b extended from the linear section 520e to cross the turning shaft 520a, and a projecting section 520c extended along the turning shaft 520a. Further, the third bar 520 includes an arcuate section 520g extending in the -Z direction of the projecting section 520c and a linear section 520h turning about the turning shaft 520a connected to the arcuate section 520g. Similarly, the fourth bar 521 includes a linear section 521e functioning as a turning shaft extended to the first lateral member 512b, an arcuate section 521b extended from the linear section 521e to cross the turning shaft 521a, and a projecting section 521c extended along the turning shaft 521a. Further, the fourth bar 521 includes an arcuate section 521g extending in the -Z direction of the projecting section 521c and a linear section 521h turning about the turning shaft 521a connected to the arcuate section 521g. A second distal end section 524 functioning as a second fixing section of the second gripping section 511 is turnably fixed to the linear section 520h of the third bar 520 and the linear section 521h of the fourth bar 521.

On the Z direction side of the first lateral member 512b, a third urging section 522 functioning as an urging section is set in a place opposed to the third bar 520. A fourth urging section 523 functioning as an urging section is set in a place opposed to the fourth bar 521. The third urging section 522 is connected to the linear section 520e of the third bar 520 and generates torque corresponding to an angle at which the third bar 520 turns. Similarly, the fourth urging section 523 is connected to the linear section 521e of the fourth bar 521 and generates torque corresponding to an angle at which the fourth bar 521 turns. The third bar 520 and the fourth bar 521 are urged in a predetermined turning direction by the third urging section 522 and the fourth urging section 523.

As explained above, the third bar 520 is a bar including the two arcuate sections 520b and 520g and formed in a shape curved in a bow shape or a substantial bow shape. Both ends of the third bar 520 are formed in a linear shape and are the linear sections 520e and 520h arranged along the turning shaft 520a. A portion between the two arcuate sections 520a and 520g most distant from the turning shaft 520a is set as the projecting section 520c. In the figures (Figs. 18A to 19B) in this embodiment, the projecting section 520c is formed in a linear shape. However, the projecting section 520c may be, for example, an arcuate projecting section. Similarly, the fourth bar 521 is a bar including the two arcuate sections 521b and 521g and formed in a shape curved in a bow shape or a substantial bow shape. Both ends of the fourth bar 521 are formed in a linear shape and are the linear sections 521e and 521h arranged along the turning shaft 521a. A portion between the two arcuate sections 521b and 521g most distant from the turning shaft 521a is set as the projecting section 521c. Note that, in the figures (Figs. 18A to 19B) in this embodiment, the projecting section 521c is formed in a linear shape. However, the projecting section 521c may be, for example, an arcuate projecting section. The projecting section 520c of the third bar 520 and the projecting section 521c of the fourth bar 521 do not have to be formed in the same shape.

The third bar 520 and the fourth bar 521 are not limited in a sectional shape thereof. However, the object to be gripped 502 is gripped by the gripping apparatus 504, whereby a gripping film 526 that comes into contact with the object to be gripped 502 comes close to and comes into contact with the third bar 520 and the fourth bar 521. In this case, to prevent the third bar 520 and the fourth bar 521 from damaging the front surface of the gripping film 526, it is preferable that the third bar 520 and the fourth bar 521 have a sectional shape without corners, for example, a circular sectional shape. Note that the third bar 520 and the fourth bar 521 may be formed by hollow tubes.

In the first gripping section 510, the gripping film 525 is set between the first lateral member 512b and the first distal end section 518 to come into contact with the object to be gripped 502. One end of the gripping film 525 is fixed to the first lateral member 512b and the other end is fixed to the first distal end section 518. The gripping film 525 is stretched in the Z direction via the first lateral member 512b and the first distal end section 518 by the first bar 514 and the second bar 515. Similarly, in the second gripping section 511, the gripping film 526 is set between the second lateral member 513b and the second distal end section 524 to come into contact with the object to be gripped 502. One end of the gripping film 526 is fixed to the second lateral member 513b and the other end is fixed to the second distal end section 524. The gripping film 526 is stretched in the Z direction via the second lateral member 513b and the second distal end 524 by the third bar 520 and the fourth bar 521. That is, in the gripping apparatus 504, in the gripping films 525 and 526, object-to-be-gripped contact areas 525a and 526a functioning as first gripping areas that hold and come into contact with the object to be gripped 502 are arranged to be opposed to each other. The material of the gripping film 525 and the gripping film 526 only has to be an elastic material and is not particularly limited. As the material of the gripping film 525 and the gripping film 526, for example, cloth woven with synthetic rubber such as silicon rubber, natural rubber, or thread-like rubber can be used. The gripping film 525 and the gripping film 526 can be formed in a net shape, imparted with flexibility, and used. In this embodiment, silicon rubber is used for the gripping film 525 and the gripping film 526.

When the position changing section 509 reduces the interval between the first stage 509b and the second stage 509c, the gripping film 525 and the gripping film 526 come into contact with the side surfaces and the bottom surface on the side surface side of the object to be gripped 502. The first gripping section 510 and the second gripping section 511 clamp and hold the object to be gripped 502 with a part of the gripping film 525 and the gripping film 526.

A control unit 527 is set on the Y direction side in the figure of the gripping apparatus 504. The control unit 527 is a device that performs control of the arm 505 and control of the gripping apparatus 504. The control unit 527 moves the first stage 509b and the second stage 509c to adjust the interval between a first holding section 510 and a second holding section 511.

The material of the first base section 512, the second base section 513, the first distal end section 518, the second distal end section 524, the first bar 514, the second bar 515, the third bar 520, and the fourth bar 521 only has to be a material withstanding cleaning and sterilization and having rigidity and is not particularly limited. Metal, silicon resin, and the like can be used. In this embodiment, for example, stainless steel is adopted as the material of the first base section 512, the second base section 513, the first distal end section 518, the second distal end section 524, the first bar 514, the second bar 515, the third bar 520, and the fourth bar 521. Note that, as the cleaning, for example, a method obtained by combining a method of immersing an object to be gripped in cleaning liquid and cleaning the object to be gripped with ultrasound and mechanical cleaning such as brushing can be used. As the sterilization, for example, sterilization by boiling, chlorination, or the like can be performed.

As shown in Fig. 18A, when the gripping apparatus 504 does not hold the object to be gripped 502, the first bar 514 and the second bar 515 are arranged along the same plane. The third bar 520 and the fourth bar 521 are arranged along the same plane. As shown in Fig. 18B, when the first base section 512 and the second base section 513 come close to each other, the first to fourth bars 514 to 521 come into contact with the object to be gripped 502. Since the first to fourth bars 514 to 521 are curved in a bow shape, the first to fourth bars 514 to 521 turn and the first distal end section 518 and the second distal end section 524 are located further on the center side than the outer periphery in the ±X directions of the object to be gripped 502.

As shown in Fig. 19A, the first base section 512 and the second base section 513 come closer to each other. The first bar 514 and the second bar 515 project to the -X side and the third bar 520 and the fourth bar 521 project to the X side. The first distal end section 518 and the second distal end section 524 are located further on the center side than the outer periphery in the X direction of the object to be gripped 502.

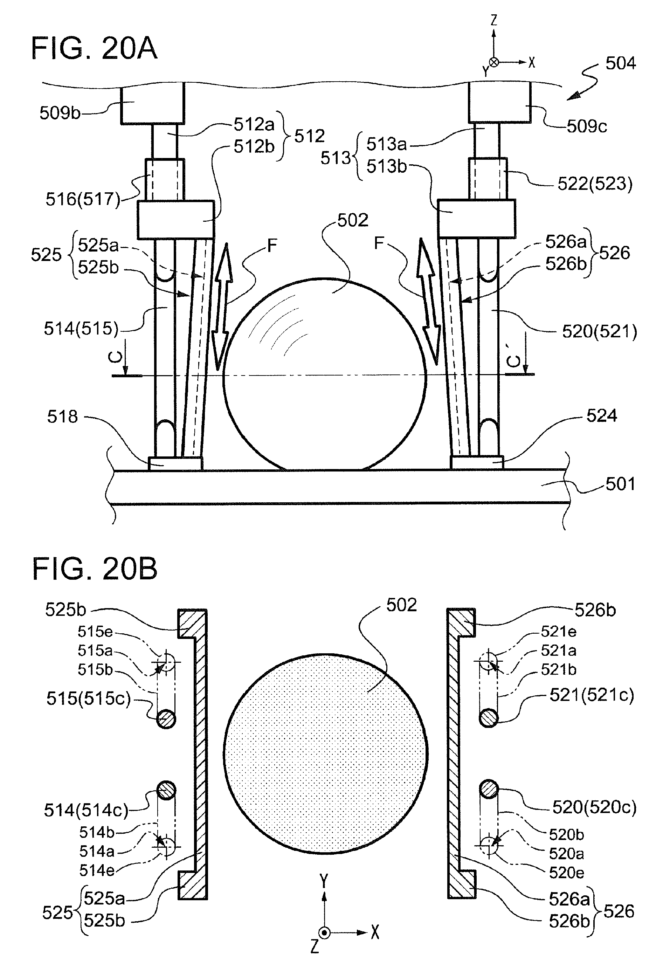

In this embodiment, the gripping films 525 and 526 included in the gripping apparatus 504 are explained in an example in which the object to be gripped 502 is a spherical body shown in Figs. 18A to 19B. Fig. 20A is a partial front view in the Y direction of the gripping apparatus 504 shown in Fig. 18A. Fig. 20B is a sectional view of the C-C' part shown in Fig. 20A.

In a state in which the object to be gripped 502 is placed on the placing table 501 shown in Fig. 20A, the gripping films 525 and 526 included in the gripping apparatus 504 are separated from the object to be gripped 502. In this case, the first bar 514, the second bar 515, the third bar 520, and the fourth bar 521 are urged by the first urging section 516, the second urging section 517, the third urging section 522, and the fourth urging section 523 (also referred to as urging sections 516, 517, 522, and 523). As shown in Fig. 20B, the projecting sections 514c and 515c and the projecting sections 520c and 521c are arranged close to each other in the Y direction.

The gripping film 525 includes, as shown in Fig. 20B, an object-to-be-gripped contact area 525a functioning as a first gripping area that comes into contact with the object to be gripped 502 and a high tension section 525b functioning as a second gripping area in an outer edge section in the Y direction of the object-to-be-gripped contact area 525a. The first lateral member 512b and the first distal end section 518 attached with the gripping film 525 are supported by the first bar 514 and the second bar 515 to stretch the gripping film 525 in a stretching direction F, which is a substantial Z direction, and extend the high tension section 525b along the stretching direction F. The high tension section 525b is formed thick with respect to the object-to-be-gripped contact area 525a. Tensile stress of the high tension section 525b is larger than tensile stress of the object-to-be-gripped contact area 525a with respect to a displacement amount in the stretching direction F.

Similarly, the gripping film 526 includes, as shown in Fig. 20B, an object-to-be-gripped contact area 526a functioning as a first gripping area that comes into contact with the object to be gripped 502 and a high tension section 526b functioning as a second gripping area in an outer edge section in the Y direction of the object-to-be-gripped contact area 526a. The second lateral member 513b and the second distal end section 524 attached with the gripping film 526 are supported by the third bar 520 and the fourth bar 521 to stretch the gripping film 526 in the stretching direction F, which is the substantial Z direction, and extend the high tension section 526b along the stretching direction F. The high tension section 526b is formed thick with respect to the object-to-be-gripped contact area 526a. Tensile stress of the high tension section 526b is larger than tensile stress of the object-to-be-gripped contact area 526a with respect to a displacement amount in the stretching direction F.

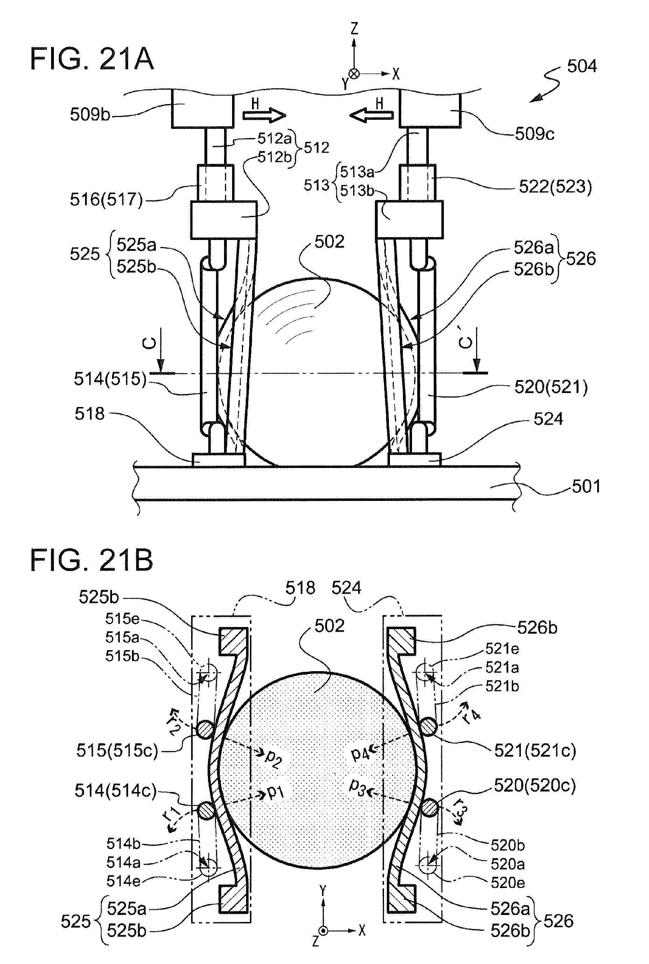

Fig. 21A is a Y direction partial front view of the gripping apparatus 504 shown in Fig. 19A. Fig. 21B is a sectional view of the C-C' part shown in Fig. 21A. Figs. 21A and 21B and Fig. 19A show a state at a stage when a gripping operation for the object to be gripped 502 is started, that is, a state in which the first stage 509b and the second stage 509c are driven in an arrow H direction shown in the figures and the gripping films 525 and 526 come close to each other. The gripping films 525 and 526 come close to each other, whereby the object to be gripped 502 is clamped by the object-to-be-gripped contact areas 525a and 526a of the gripping films 525 and 526, and the object-to-be-gripped contact areas 525a and 526a start to be deformed to swell in the X direction by the object to be gripped 502.

In this case, as shown in Fig. 21A, in the gripping film 525, the object-to-be-gripped contact area 525a is pressed by the object to be gripped 502 and starts to be deformed to swell. However, the high tension section 525b extended to an outward extending section of the object-to-be-gripped contact area 525a is suppressed from being deformed in a swelling direction by tension higher than the tension of the object-to-be-gripped contact area 525a. Only extremely small deformation occurs with respect to the deformation of the object-to-be-gripped contact area 525a. Similarly, in the gripping film 526, the object-to-be-gripped contact area 526a is pressed by the object to be gripped 502 and starts to be deformed to swell. However, the high tension section 525b extended to an outward extending section of the object-to-be-gripped contact area 526a is suppressed from being deformed in a swelling direction by tension higher than the tension of the object-to-be-gripped contact area 526a. Only small deformation occurs compared with the deformation of the object-to-be-gripped contact area 526a.

As shown in Fig. 21B, which is a C-C' part section of Fig. 21A, the projecting section 514c of the first bar 514 is moved in an outer side r₁ direction to turn about the turning shaft 514a by the swelling of the object-to-be-gripped contact area 525a of the gripping film 525. Similarly, the projecting section 515c of the second bar 515 is moved in an outer side r₂ direction to turn about the turning shaft 515a by the swelling of the object-to-be-gripped contact area 525a of the gripping film 525. Further, the projecting section 520c of the third bar 520 is moved in an outer side r₃ direction to turn about the turning shaft 520a by the swelling of the object-to-be-gripped contact area 526a of the gripping film 526. Similarly, the projecting section 521c of the fourth bar 521 is moved in an outer side r₄ direction to turn about the turning shaft 521a by the swelling of the object-to-be-gripped contact area 526a of the gripping film 526.

The first bar 514, the second bar 515, the third bar 520, and the fourth bar 521 are respectively urged by the first urging section 516, the second urging section 517, the third urging section 522, and the fourth urging section 523 toward the object to be gripped 502 direction, that is, the projecting sections 514c, 515c, 520c, and 521c are urged toward the opposite directions of the moving directions, r₁, r₂, r₃, and r₄. Consequently, the object to be gripped 502 is urged in the opposite directions p₁, p₂, p₃, and p₄ of the moving directions r₁, r₂, r₃, and r₄ via the object-to-be-gripped contact areas 525a and 526a of the gripping films 525 and 526. The first urging section 516, the second urging section 517, the third urging section 522, and the fourth urging section 523 act to stably arrange the object to be gripped 502 in the center of the gripping films 525 and 526.

Further, in the gripping film 525 and the gripping film 526, deformation amounts of the high tension section 525b and 526b decrease with respect to the object-to-be-gripped contact areas 525a and 526a, whereby the object-to-be-gripped contact areas 525a and 526a are deformed to wrap the object to be gripped 502 as shown in Fig. 21B. Consequently, the gripping films 525 and 526 act to stably arrange the object to be gripped 502 in the center of the gripping films 525 and 526 by the gripping films 525 and 526 as well.

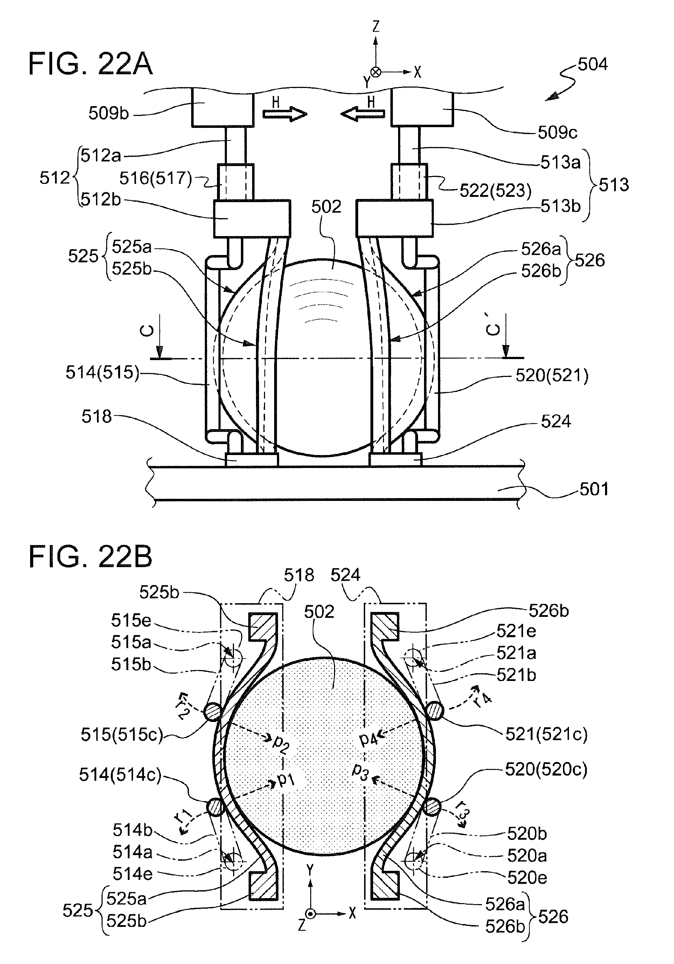

Further, as shown in Fig. 22A, the first stage 509b and the second stage 509c are further driven from the state shown in Fig. 21A in the arrow H direction shown in the figure to bring the gripping films 525 and 526 close to each other. The object to be gripped 502 is gripped in a conveyable state to the gripping apparatus 504. That is, even if the exterior of the object to be gripped 502 having flexibility is pressed by the gripping films 525 and 526 and deformed, the first distal end section 518 and the second distal end section 524 are opposed to the exterior after the deformation at a sufficiently small interval. Consequently, a drop of the object to be gripped 502 due to the gravity is not caused.

As shown in Fig. 22B, which is a C-C' sectional view shown in Fig. 22A, the gripping films 525 and 526 come closer to each other, whereby the swelling of the obj ect-to-be-gripped contact areas 525a and 526a of the gripping films 525 and 526 is increased by the object to be gripped 502. Moving amounts in the moving directions r₁, r₂, r₃, and r₄ of the projecting section 514c, 515c, 520c, and 521c of the first bar 514, the second bar 515, the third bar 520, and the fourth bar 521 increase. According to the increase in the moving amounts, urging forces of the projecting sections 514c, 515c, 520c, and 521c toward the object to be gripped 502 direction by the first urging section 516, the second urging section 517, the third urging section 522, and the fourth urging section 523, that is, urging force in the p₁, p₂, p₃, and p₄ directions increase. Therefore, the object-to-be-gripped contact areas 525a and 526a of the gripping films 525 and 526 act to more stably arrange the object to be gripped 502 in the center of the gripping films 525 and 526. The object to be gripped 502 does not drop from the gripping apparatus 504 during conveyance and can be stably conveyed.

As shown in Fig. 22B, deformation, that is, swelling of the high tension sections 525b and 526b of the gripping films 525 and 526 is small with respect to the object-to-be-gripped contact areas 525a and 526a that largely swell. Therefore, a gap between the high tension section 525b of the gripping film 525 and the high tension section 526b of the gripping film 526 having small deformation amounts can be maintained to be smaller than the exterior of the obj ect to be gripped 502. Even if the object to be gripped 502 is a flexible and slippery material, it is possible to suppress the object to be gripped 502 from passing through the gap between the high tension section 525b of the gripping film 525 and the high tension section 526b of the gripping film 526 and deviating from a clamping area of the object to be gripped 502 between the object-to-be-gripped contact area 525a and the object-to-be-gripped contact area 526a in the Y direction.

As explained above, the object to be gripped 502 is gripped by the gripping films 525 and 526 of the gripping apparatus 504, whereby the object-to-be-gripped contact areas 525a and 526a swell. The projecting sections 514c, 515c, 520c, and 521c included in the first bar 514, the second bar 515, the third bar 520, and the fourth bar 521 are pressed by the gripping films 525 and 526. The pressed projecting sections 514c, 515c, 520c, and 521c are moved to turn about the turning shafts 514a, 515a, 520a, and 521a of the first bar 514, the second bar 515, the third bar 520, and the fourth bar 521. However, the projecting sections 514c, 515c, 520c, and 521c of the first bar 514, the second bar 515, the third bar 520, and the fourth bar 521 are respectively urged to the gripping films 525 and 526 by the first urging section 516, the second urging section 517, the third urging section 522, and the fourth urging section 523. The urging sections 516, 517, 522, and 523 are explained with reference to the first urging section 516 as a representative example.

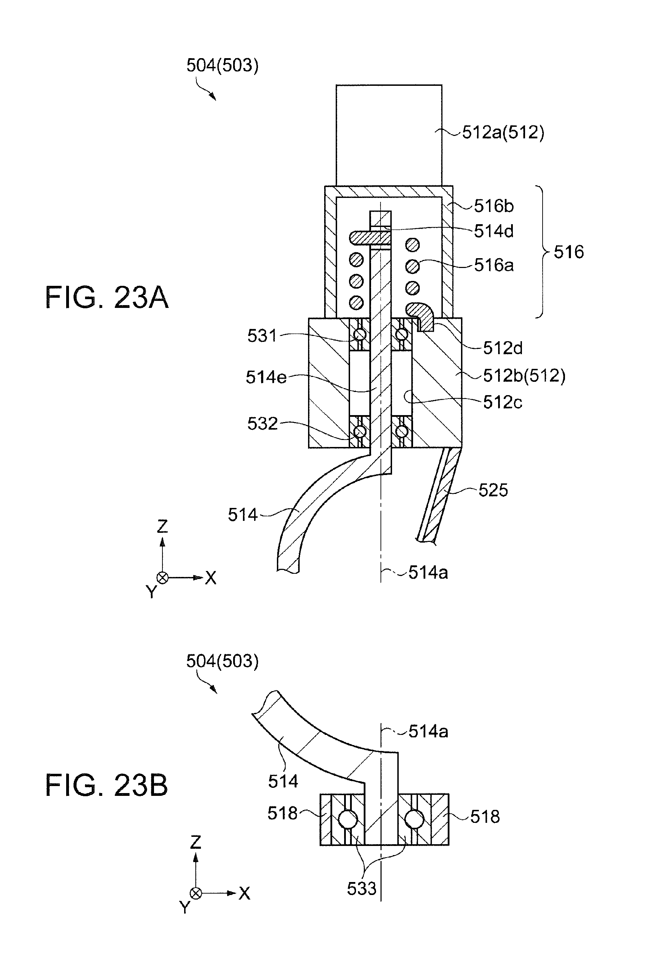

Fig. 23A is a main part schematic sectional view showing the first urging section 516 and the first base section 512. As shown in Fig. 23A, a through-hole 512c is set in the first lateral member 512b. The first bar 514 is inserted into the through-hole 512c. In the through-hole 512c, a first bearing 531 functioning as a bearing mechanism and a second bearing 532 functioning as a bearing mechanism are set. The first bearing 531 and the second bearing 532 turnably support the first bar 514. The first bearing 531 and the second bearing 532 support the first bar 514 in two places. Consequently, the first bearing 531 and the second bearing 532 can suppress the linear section 514e of the first bar 514 from tilting with respect to the turning shaft 514a and accurately turn the first bar 514 about the turning shaft 514a.

The first bearing 531 and the second bearing 532 only have to be capable of turning the first bar 514 with low frictional resistance. A type of the first bearing 531 and the second bearing 532 is not particularly limited. As the type of the first bearing 531 and the second bearing 532, for example, rolling bearings such as a ball bearing and a roller bearing and slide bearings using engineering plastics, a bearing alloy, and ceramics can be used. In this embodiment, a ball bearing, which is a type of the ball bearing, is used.

The first bar 514 projects piercing through the first lateral member 512b. A through-hole 514d, which pierces through the first bar 514 in the radial direction, is formed at an end of the first bar 514. The first urging section 516 includes a coil spring 516a as a spring. An end of the coil spring 516a is inserted into the through-hole 514d. A recess 512d is formed on the upper surface of the first lateral member 512b. An end of the coil spring 516a is inserted into the recess 512d. When the first bar 514 turns about the turning shaft 514a, torque is applied to the first bar 514 by the coil spring 516a.

A cover 516b is set to cover the coil spring 516a. The cover 516b protects the coil spring 516a to prevent an object separating from the object to be gripped 502 from adhering to the coil spring 516a. Note that a structure in which the second bar 515 is set in the first lateral member 512b is the same as the structure in which the first bar 514 is set in the first lateral member 512b. Therefore, explanation of the structure is omitted. Similarly, a structure in which the third bar 520 and the fourth bar 521 are set in the second lateral member 513b is the same as the structure in which the first bar 514 is set in the first lateral member 512b. Therefore, explanation of the structure is omitted. An internal structure of the second urging section 517, the third urging section 522, and the fourth urging section 523 is the same as the internal structure of the first urging section 516. Therefore, explanation of the internal structure is omitted.

Fig. 23B is a main part schematic sectional view showing a connection structure of the first bar 514 and the first distal end section 518. As shown in Fig. 23B, the end in the -Z direction of the first bar 514 is formed in a linear shape extending along the turning shaft 514a. The end of the first bar 514 is set in the first distal end section 518 via the third bearing 533. Therefore, the first bar 514 is turnable at low frictional resistance with respect to the first distal end section 518.

A type of the third bearing 533 is not particularly limited. A bearing same as the first bearing 531 can be used. Note that a structure in which the second bar 515 is set in the first distal end section 518 is the same as the structure in which the first bar 514 is set in the first distal end section 518. Therefore, explanation of the structure is omitted. Similarly, a structure in which the third bar 520 and the fourth bar 521 are set in the second distal end section 524 is the same as the structure in which the first bar 514 is set in the first distal end section 518. Therefore, explanation of the structure is omitted.

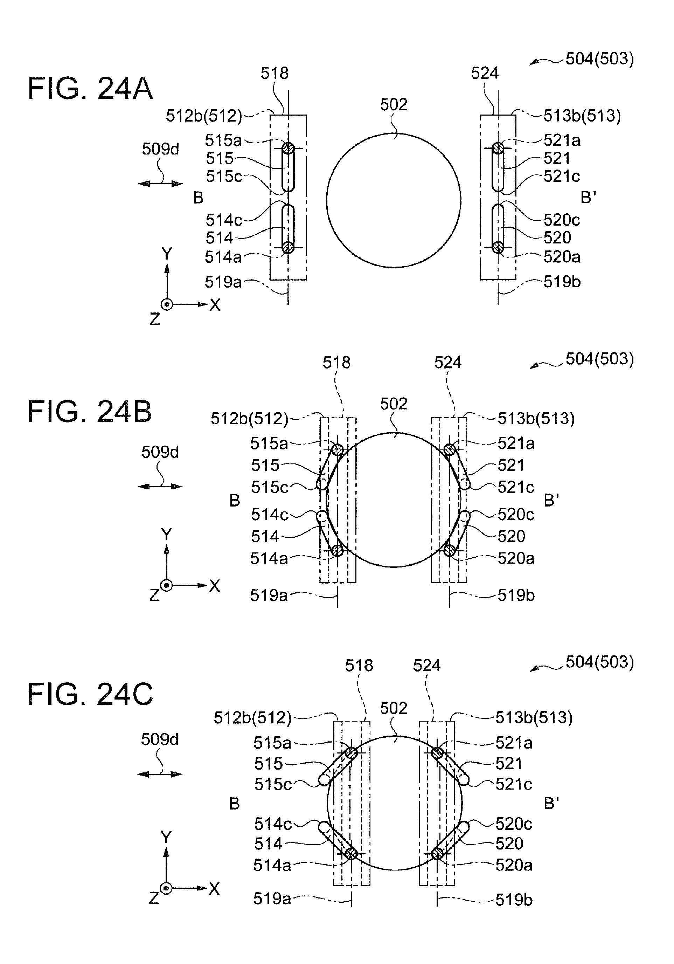

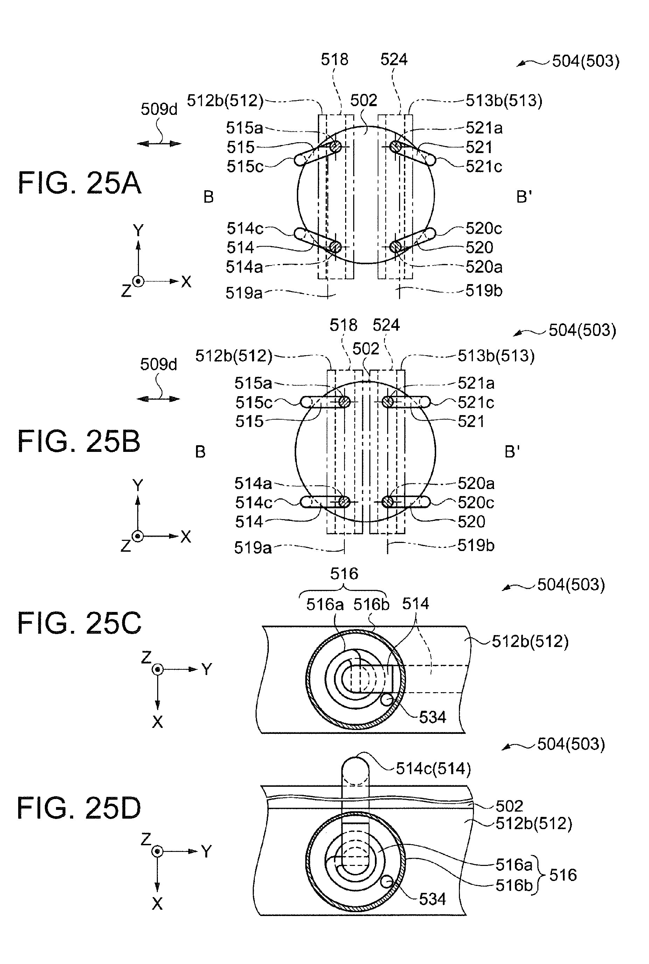

Figs. 24A to 25D are schematic diagrams for explaining motions of the first to fourth bars 514 to 521. Figs. 24A to 25B are diagrams viewed from a B-B' line in Fig. 19B. Fig. 24A shows a state in which the gripping apparatus 504 does not hold the object to be gripped 502. Figs. 24B to 25A show a process until the gripping apparatus 504 holds the object to be gripped 502. Fig. 25B shows a state in which the gripping apparatus 504 holds the object to be gripped 502. Figs. 25C and 25D are diagrams of the first bar 514 viewed from the Z direction side of the first lateral member 512b. Fig. 25C shows a state in which the gripping apparatus 504 does not hold the object to be gripped 502. Fig. 25D shows a state in which the gripping apparatus 504 holds the obj ect to be gripped 502. Note that, to clearly show the figures, a surface on the Z direction side of the cover 516b is not shown in Figs. 25C and 25D. The gripping film 525 and the gripping film 526 are not shown in Figs. 24A to 25D.

As shown in Fig. 24A, when the gripping apparatus 504 does not hold the object to be gripped 502 having a substantially spherical shape, the interval between the first distal end section 518 and the second distal end section 524 in the X direction is larger than the exterior of the object to be gripped 502. The projecting section 514c of the first bar 514 and the projecting section 515c of the second bar 515 come close to each other and project toward the longitudinal direction of the first distal end section 518. Consequently, the first bar 514 and the second bar 515 overlap the first distal end section 518 along the same or substantially the same imaginary plane 519a when viewed from the Z direction. The first bar 514 and the second bar 515 are prevented from projecting in the X direction of the first distal end section 518. Similarly, the projecting section 520c of the third bar 520 and the projecting section 521c of the fourth bar 521 come close to each other and project toward the longitudinal direction of the second distal end section 524. Consequently, the third bar 520 and the fourth bar 521 overlap the second distal end section 524 along the same or substantially the same imaginary plane 519b when viewed from the Z direction. The third bar 520 and the fourth bar 521 are prevented from projecting in the X direction of the second distal end section 524.

As shown in Fig. 24B, the position changing section 509 moves the first base section 512 and the second base section 513 to reduce the interval between the first bar 514 and the second bar 515 and the interval between the third bar 520 and the fourth bar 521. Consequently, in the first bar 514, the projecting section 514c is pushed by the object to be gripped 502 via the gripping films 525 and 526 (not shown in the figure) and turns about the turning shaft 514a. Similarly, the second bar 515, the third bar 520, and the fourth bar 521 respective turn about the turning shaft 515a, the turning shaft 520a, and the turning shaft 521a. The first bar 514 and the second bar 515 move away from the imaginary plane 519a. The third bar 520 and the fourth bar 521 move away from the imaginary plane 519b. The first distal end section 518 and the second distal end section 524 move toward the center of the object to be gripped 502 when viewed from the Z direction, that is, a direction in which the interval between the first distal end section 518 and the second distal end section 524 is reduced.

As shown in Figs. 24C and 25A, the position changing section 509 further moves the first base section 512 and the second base section 513 to reduce the interval between the first bar 514 and the second bar 515 and the interval between the third bar 520 and the fourth bar 521. Consequently, the projecting section 514c is pressed by the object to be gripped 502 and the first bar 514 turns about the turning shaft 514a. Similarly, the second bar 515, the third bar 520, and the fourth bar 521 respectively turn about the turning shaft 515a, the turning shaft 520a, and the turning shaft 521a. The first distal end section 518 and the second distal end section 524 move toward the center of the object to be gripped 502 when viewed from the Z direction, that is, in a direction in which the interval between the first distal end section 518 and the second distal end section 524 is reduced.

As shown in Fig. 25B, the position changing section 509 further moves the first base section 512 and the second base section 513 to reduce the interval between the first bar 514 and the second bar 515 and the interval between the third bar 520 and the fourth bar 521. The projecting section 514c of the first bar 514 and the projecting section 515c of the second bar 515 are pressed by the object to be gripped 502 and project toward a direction away from the first lateral member 512b. The first distal end section 518 enters the lower side shown in the figure, that is, the bottom of the object to be gripped 502 when viewed from the Z direction.

Similarly, the projecting section 520c of the third bar 520 and the projecting section 521c of the fourth bar 521 are pressed by the object to be gripped 502 and project toward a direction away from the second lateral member 513b. The second distal end section 524 enters the bottom of the object to be gripped 502 when viewed from the Z direction. Consequently, the interval between the first distal end section 518 and the second distal end section 524 is smaller than the width of the object to be gripped 502. Therefore, the object to be gripped 502 can be supported by the first distal end section 518, the second distal end section 524, the gripping film 525, and the gripping film 526.

Subsequently, when the gripping apparatus 504 releases the object to be gripped 502, the position changing section 509 moves the first base section 512 and the second base section 513 and increases the interval between the first base section 512 and the second base section 513. In this case, the first bar 514, the second bar 515, the third bar 520, and the fourth bar 521 turn in order indicated by in Figs. 25B, 25A, 24C, 24B, and 24A.

As a result, as shown in Fig. 24A, the first distal end section 518 and the second distal end section 524 move away from the object to be gripped 502 when viewed from the Z direction. The projecting section 514c of the first bar 514 and the projecting section 515c of the second bar 515 come close to each other and project toward the longitudinal direction of the first distal end section 518. The first bar 514 and the second bar 515 overlap the first distal end section 518 along the same or substantially the same plane when viewed from the Z direction. Similarly, the projecting section 520c of the third bar 520 and the projecting section 521c of the fourth bar 521 come close to each other and project toward the longitudinal direction of the second distal end section 524. Consequently, the third bar 520 and the fourth bar 521 overlap the second distal end section 524 along the same or substantially the same plane when viewed from the Z direction. The third bar 520 and the fourth bar 521 are prevented from projecting in the X direction of the second distal end section 524.

As shown in Fig. 25C, a regulating pin 534 is set near the coil spring 516a on the surface on the Z direction side of the first lateral member 512b. The first bar 514 is bent at a right angle in a place near the end on the -Z direction side. The first bar 514 is urged by the coil spring 516a to turn clockwise in the figure. When the first bar 514 is not in contact with the object to be gripped 502, a side surface near the end of the first bar 514 comes into contact with the regulating pin 534. The first bar 514 is regulated not to turn by the regulating pin 534. With this structure, the projecting section 514c of the first bar 514 faces the longitudinal direction of the first distal end section 518.

As shown in Fig. 25D, when the first bar 514 comes into contact with the object to be gripped 502, the first bar 514 moves away from the regulating pin 534. When the object to be gripped 502 moves in the -X direction in the figure, the first bar 514 is pushed by the object to be gripped 502 and turns counterclockwise. When the object to be gripped 502 moves in the X direction, the first bar 514 is urged by the coil spring 516a and turns clockwise.

The structure of second urging section 517, the third urging section 522, and the fourth urging section 523 is the same as the structure of the first urging section 516. The turning of the second bar 515, the third bar 520, and the fourth bar 521 is regulated in the same manner as the turning of the first bar 514. The motions of the urging sections and the bars are the same as the motions of the first urging section 516 and the first bar 514. Therefore, detailed explanation is omitted.

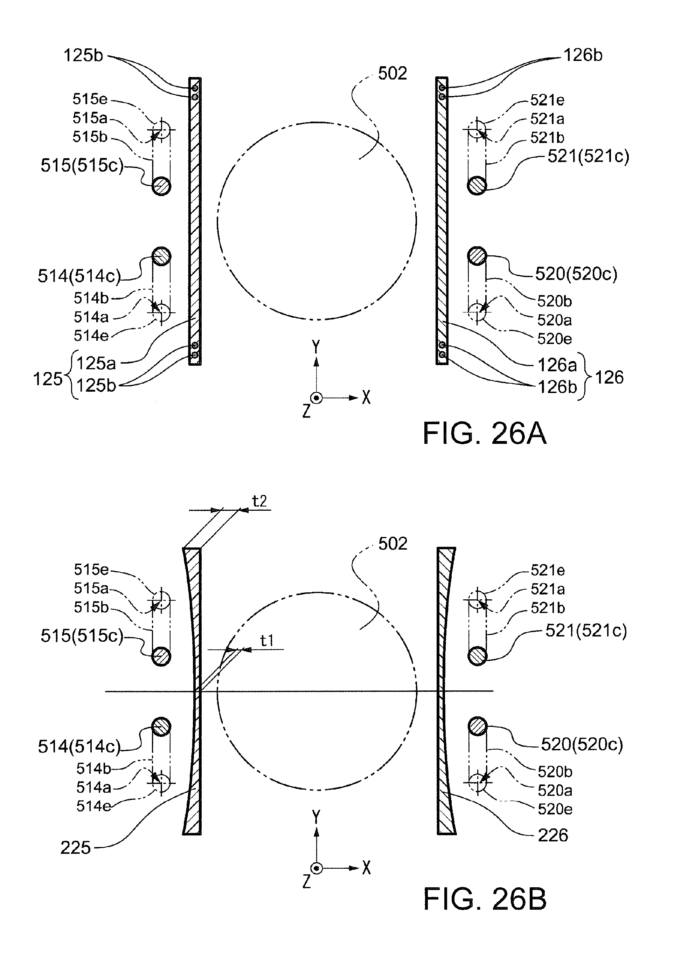

Figs. 26A and 26B show other forms of the high tension sections 525b and 526b in the gripping films 525 and 526 and show a sectional shape of the gripping film in the C-C' part shown in Fig. 20A.

In gripping films 125 and 126 shown in Fig. 26A, high tension members 125b and 126b are inserted into the insides in the outer edge sections extending along the Z direction of object-to-be-gripped contact areas 125a and 126a. As the high tension members, for example, a metal wire excellent in corrosion resistance such as stainless steel or titanium or a wire material of high strength resin such as nylon, Teflon (registered trademark), or polyurethane is suitably used.

As explained above, it is preferable to use synthetic rubber such as silicon rubber as a main material of the gripping films 125 and 126. By insert-molding the high tension members 125b and 126b in a molding process for the gripping films 125 and 126, it is possible to secure adhesion to the high tension members 125b and 126b. By selecting the material of the high tension members 125b and 126b or selecting the thickness (the wire diameter) of the wire material, it is possible to obtain the gripping films 125 and 126, tension of which can be easily adjusted to a desired level of tension with respect to the object-to-be-gripped contact areas 125a and 126a.

Gripping films 225 and 226 shown in Fig. 26B are formed to increase, when thickness t2 of an outer edge section in the Y direction is set in a relation of t2>t1 with respect to thickness t1 of substantially the center of the gripping films 225 and 226, the thickness gradually from t1 to t2. By forming the gripping films 225 and 226 in this way, it is possible to continuously change tension distribution of the gripping films 225 and 226. Since stress does not concentrate in any part of the gripping films 225 and 226, it is possible to improve durability of the gripping films 225 and 226.

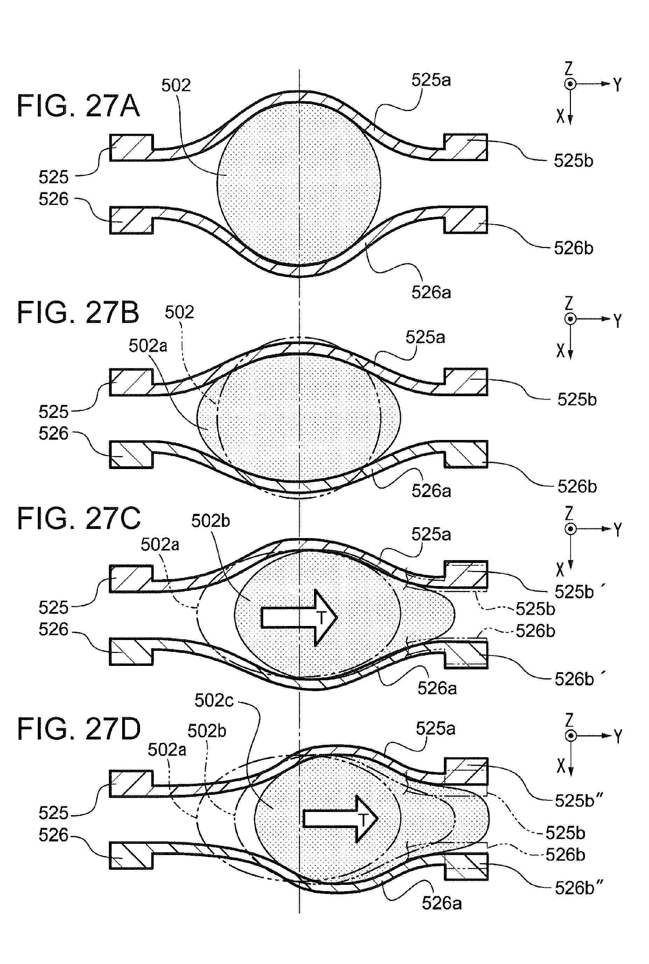

Figs. 27A to 27D are diagrams for explaining action and effects of the high tension sections 525b and 526b formed in the gripping films 525 and 526 included in the gripping apparatus 504 according to the fourth embodiment and are sectional schematic views showing an operation relation between the gripping films 525 and 526 and the objects to be gripped 2 in a gripping operation of the gripping apparatus 504. Note that, for convenience of explanation, only the gripping films 525 and 526 and the object to be gripped 502 are shown and the other components are not shown.

A state shown in Fig. 27A represents a state immediately after the object to be gripped 502 is clamped and gripped by the gripping films 525 and 526 included in the gripping apparatus 504. As shown in Fig. 27A, the object to be gripped 502 is deformed such that the object-to-be-gripped contact areas 525a and 526a of the gripping films 525 and 526 swell along the exterior of the object to be gripped 502. In this embodiment, the object to be gripped 502 is food such as konnyaku, jelly, or agar that is substantially spherical and flexible and having a slippery surface. The object to be gripped 502 is deformed from the state immediately after the gripping shown in Fig. 27A by the tension of the gripping films 525 and 526 and changes to the shape of an object to be gripped 502a as shown in Fig. 27B.

As shown in Fig. 27B, if the object to be gripped 502a can be clamped and gripped to be equally wrapped by the object-to-be-gripped contact areas 525a and 526a, it is possible to shift to a conveying operation while keeping the deformed shape of the object to be gripped 502a in a state shown in Fig. 27B. However, if the object to be gripped 502 is not gripped in the center area of the gripping films 525 and 526 and, for example, the object to be gripped 502 is clamped and gripped while the object to be gripped 502 causes positional deviation with respect to the gripping films 525 and 526 in the Y direction shown in the figure, the object to be gripped 502a (the object to be gripped 502) slips to move between the gripping films 525 and 526 in an arrow T direction as shown in Fig. 27C.

The object to be gripped 502a shows a behavior of passing through a gap between the high tension section 525b and the high tension section 526b of the gripping films 525 and 526 while being deformed into an object to be gripped 502b. However, the high tension sections 525b and 526b are parts having high tension compared with the object-to-be-gripped contact areas 525a and 526a. Deformation of the high tension sections 525b and 526b is suppressed against action of the object to be gripped 502b expanding the gap between the high tension section 525b and the high tension section 526b. As shown in the figure, the high tension sections 525b and 526b are slightly deformed and a gap between a high tension section 525b' and a high tension section 526b' is maintained.

Further, as shown in Fig. 27D, the flexible object to be gripped 502 having the slippery surface is about to further move in the arrow T direction while being further deformed from the object to be gripped 502b into an object to be gripped 502c. Deformation of the high tension sections 525b and 526b is suppressed against action of the object to be gripped 502b expanding the gap between the high tension section 525b and the high tension section 526b while being deformed into the object to be gripped 502c. As shown in the figure, the high tension sections 525b and 526b are slightly deformed and a gap between a high tension section 525b" and a high tension section 526b" is maintained. Consequently, in the state of the object to be gripped 502c after the deformation, the object to be gripped 502 is prevented from moving in the T direction in the gap between the high tension section 525b" and the high tension section 526". The object to be gripped 502 is suppressed from deviating from between the gripping film 525 and the gripping film 526.

As explained above, with the gripping films 525 and 526 included in the gripping apparatus 504 according to this embodiment, it is possible to surely clamp and grip the flexible object to be gripped 502 having the slippery surface. This makes it possible to mechanize a process for gripping and conveying target food without damaging the shape of the target food, which has been considered difficult in a food processing process in which flexible materials are often used. Therefore, it is possible to implement automation and rationalization of the food processing process and a reduction in cost through the automation and rationalization and eliminate manual work. In hygiene management, it is possible to greatly suppress intrusion of bacteria from the outside.

### Fifth Embodiment

Three examples of a form of a robot including a robot hand in a fifth embodiment are explained below. The robot in this embodiment includes the robot hand 4 according to the first embodiment. Note that the robot in this embodiment can also be used as a conveying apparatus.

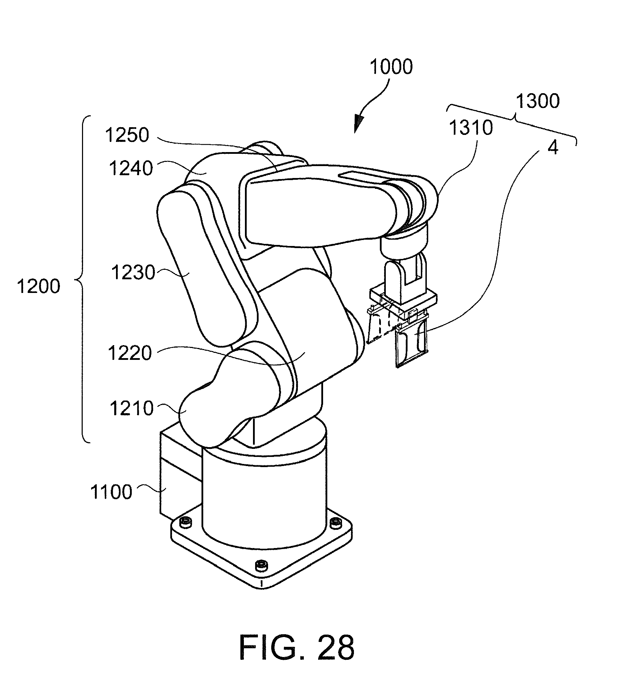

First, a robot 1000 including the robot hand 4 is explained with reference to Fig. 28. Fig. 28 is a perspective view showing the structure of the robot.

As shown in Fig. 28, the robot 1000 is a vertical multi-joint robot. The robot 1000 includes a main body section 1100, an arm section 1200, and a robot hand section 1300. The main body section 1100 is fixed on, for example, a floor, a wall, a ceiling, or a movable wagon. The arm section 1200 is provided movably with respect to the main body section 1100. The main body section 1100 incorporates a not-shown actuator that generates power for turning the arm section 1200, a control unit that controls the actuator, and the like.

The arm section 1200 includes a first frame 1210, a second frame 1220, a third frame 1230, a fourth frame 1240, and a fifth frame 1250. The first frame 1210 turnably and bendably connected to the main body section 110 via a turning and bending shaft. The second frame 1220 is connected to the first frame 1210 and the third frame 1230 via a turning and bending shaft. The third frame 1230 is connected to the second frame 1220 and the fourth frame 1240 via a turning and bending shaft. The fourth frame 1240 is connected to the third frame 1230 and the fifth frame 1250 via a turning and bending shaft. The fifth frame 1250 is connected to the fourth frame 1240 via a turning and bending shaft. The arm section 1200 operates with the frames 1210 to 1250 turning or bending in a complex manner about the turning and bending shafts according to the control by the control unit.

In the fifth frame 1250 of the arm section 1200, the robot hand section 1300 is attached to the other side of a connecting section to the fourth frame 1240. The robot hand section 1300 includes the robot hand (the gripping apparatus) 4 according to the first embodiment functioning as a robot hand capable of gripping a target and a robot hand connecting section 1310 incorporating a motor that causes the robot hand 4 to perform a turning motion. The robot hand section 1300 is connected to the fifth frame 1250 by the robot hand connecting section 1310.

In addition to the motor, a not-shown force detecting device or the like is incorporated in the robot hand connecting section 1310. Consequently, when the robot hand section 1300 is moved to a predetermined operation position according to the control by the control unit, it is possible to detect, with the force detecting device, contact with an obstacle or a contact with the target due to an operation command exceeding a predetermined position, or the like as a force, feed back the force to the control unit of the robot 1000, and cause the control unit to execute an avoidance behavior.

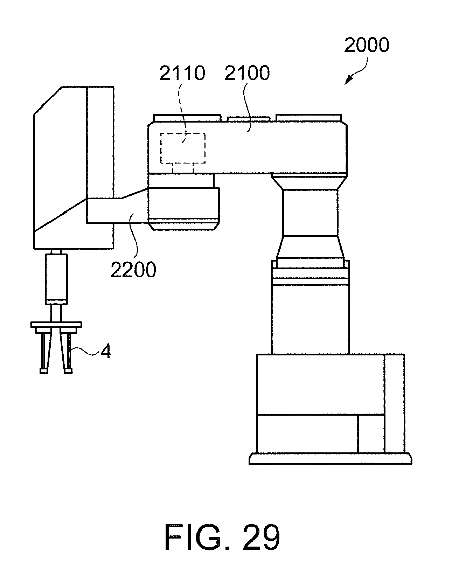

A robot 2000 including the robot hand 4 is explained with reference to Fig. 29. Fig. 29 is a schematic front view showing the structure of the robot.

As shown in Fig. 29, the robot 2000 is a horizontal multi-joint robot and is a so-called scalar robot. The robot 2000 includes a first arm 2100. A second arm 2200 is set to be connected to the first arm 2100. A motor 2110 is set in the first arm 2100. An output shaft of the motor 2110 is connected to the second arm 2200. The second arm 2200 can be horizontally turned with respect to the first arm 2100 by driving the motor 2110.

The robot hand 4 in the first embodiment is set in the second arm 2200.

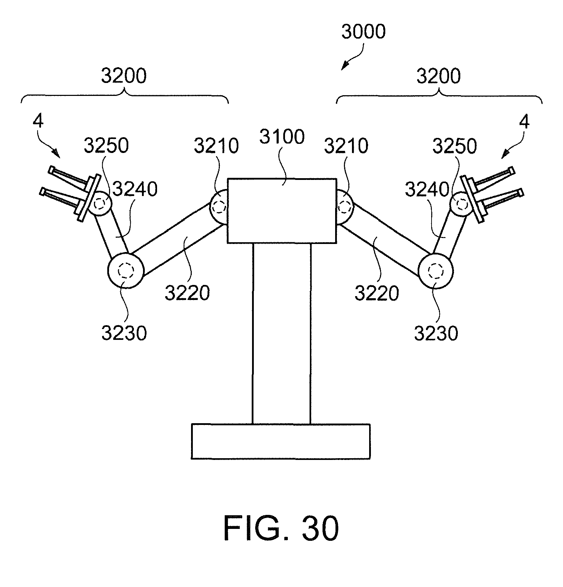

A robot 3000 including the robot hand 4 is explained with reference to Fig. 30. Fig. 30 is a schematic front view showing the structure of a double-arm robot.

As shown in Fig. 30, the robot 3000 is a double-arm robot. The robot 3000 includes a main body section 3100. A pair of arm sections 3200 is set to be connected to the main body section 3100. In each of the arm sections 3200, a shoulder joint section 3210, a first link 3220, an elbow joint section 3230, a second link 3240, a wrist joint section 3250, and the robot hand 4 are set in this order.

In the examples explained above, in the robots 1000, 2000, and 3000 in this embodiment, the robot hand 4 according to the first embodiment is used in the robot hand section 1300, the second arm 2200, and the arm section 3200. However, instead of the robot hand 4, any one of the robot hands 4a and 4b and the gripping apparatus 504 in the embodiments may be used.

As explained above, according to the fifth embodiment, there are effects explained below.
(1) According to the embodiment, in the robots 1000, 2000, and 3000 in this embodiment, any one of the robot hands 4, 4a, and 4b and the gripping apparatus 504 can be used. Therefore, it is possible to grip and convey, at high speed, for example, food or a food material, in which a flexible material having a slippery surface is often used, without damaging the food or the food material. The robots 1000, 2000, and 3000 according to this embodiment can be set in a narrow work space and can be introduced into even a narrow work environment. It is possible to automate conveyance in a small factory or a small store.
(2) According to this embodiment, in the robot 2000, any one of the robot hands 4, 4a, and 4b and the gripping apparatus 504 in the embodiments can be used. Therefore, even when the gap between the adjacent objects to be gripped 2 (502) is small, the robot hands 4, 4a, and 4b and the gripping apparatus 504 in the embodiments can stably hold the objects to be gripped 2. Therefore, the robot 2000 can be a robot including the robot hands 4, 4a, and 4b and the gripping apparatus 504 that can stably hold the objects to be gripped 2 even when the gap between the adjacent objects to be gripped 2 is small.
(3) According to this embodiment, in the robot 3000, it is possible to use any one of the robot hands 4, 4a, and 4b and the gripping apparatus 504 in the embodiments. Therefore, even when the gap between the adjacent objects to be gripped 2 (502) is small, the robot hands 4, 4a, and 4b and the gripping apparatus 504 in the embodiments can stably hold the objects to be gripped 2. Therefore, the robot 3000 can be a robot including the robot hands 4, 4a, and 4b and the gripping apparatus 504 that can stably hold the objects to be gripped 2 even when the gap between the adjacent objects to be gripped 2 is small.
(4) In the robots 1000, 2000, and 3000, any one of the robot hands 4, 4a, and 4b and the gripping apparatus 504 can be used. Therefore, it is possible to stably grip the plurality of different kinds of gripping objects 2 and 502, which satisfy any one of the conditions 1 to 3 for objects to be gripped, without damaging the objects to be gripped 2 and 502.

### Modifications

Note that embodiments of the invention are not limited to the embodiments explained above. Various changes and improvements can be applied to the embodiments by those having ordinary knowledge in the field within the technical idea of the invention. Modifications are explained below.

### Modification 1

In the first embodiment, the robot hand 4 includes the two holding sections, i.e., the first holding section 10 and the second holding section 11. However, the robot hand may include one holding section or may include four or more holding sections. The holding sections may be set according to the shape and characteristics of an object to be gripped. Consequently, it is possible to stably hold the object to be gripped. Note that this modification can be applied to the second to fourth embodiments as well.

### Modification 2

In the first and second embodiments, the two bars are set in the one holding section. However, three or more bars may be set. When more bars are set, it is possible to more stably hold the distal end section.

### Modification 3

In the fifth embodiment, the robot hand 4 in the first embodiment is set in the second arm 2200 of the scalar robot 2000 and the arm section 3200 of the double-arm robot 3000. However, the robot hands 4, 4a, and 4b and the gripping apparatus 504 in the embodiments may be set in robots of other forms. For example, the robot hands 4, 4a, and 4b and the gripping apparatus 504 in the embodiments may be set in a ceiling-suspended robot, a self-propelled robot, a robot including one actuator, and a robot including three or more actuators. Besides, the robot hands 4, 4a, and 4b and the gripping apparatus 504 in the embodiments may be set in a machining device including a robot. In this case, it is possible to obtain effects same as the effects in the embodiments.

## Claims

1. A gripping apparatus that grips an object to be gripped, the gripping apparatus comprising a plurality of holding sections, wherein
each of the plurality of holding sections includes a flexible film-like member, and
the plurality of holding sections are capable of gripping a plurality of different kinds of objects to be gripped having different softness indexes in a range of 0.2 mm³/gf to 20 mm³/gf.

2. The gripping apparatus according to claim 1, wherein the softness index is a value obtained by diving displacement of a pressing section by a load pressure of the pressing section on the basis of the displacement and the load pressure obtained in a test in which the pressing section having a surface area of approximately 520 mm², approximately 260 mm², or approximately 50 mm² is used and the pressing section is pressed against the object to be gripped.

3. The gripping apparatus according to claim 1, wherein the plurality of holding sections are capable of gripping a plurality of kinds of objects to be gripped having different softness indexes in a range of 3 mm³/gf to 10 mm³/gf, preferably 0.5 mm³/gf to 10 mm³/gf.

4. The gripping apparatus according to any one of the preceding claims, wherein the film-like member is formed of an elastic member having Shore A hardness of approximately 20 to approximately 90.

5. The gripping apparatus according to any one of the preceding claims, wherein
each of the plurality of holding sections further includes:
a first fixing section;
a second fixing section provided in a position opposed to the first fixing section; and
a supporting section that couples and supports the first fixing section and the second fixing section,
a peripheral edge section of the film-like member includes a first end section and a second end section opposed to each other and a third end section and a fourth end section opposed to each other, and
the first end section and the second end section of the film-like member are respectively fixed by the first fixing section and the second fixing section and the third end section and the fourth end section form unfixed free ends.

6. The gripping apparatus according to claim 5, wherein the supporting section is arranged on a rear side of a surface of the film-like member that comes into contact with the object to be gripped.

7. The gripping apparatus according to claim 5 or 6, wherein the supporting section maintains a fixed distance between the first fixing section and the second fixing section.

8. The gripping apparatus according to any one of claims 5 to 7, wherein the supporting section is fixed between the first fixing section and the second fixing section.

9. The gripping apparatus according to any one of claims 5 to 8, wherein the supporting member is turnable about a turning shaft between the first fixing section and the second fixing section.

10. The gripping apparatus according to claim 9, wherein each of the plurality of holding sections further includes an urging section that applies, if the supporting section turns when the object to be gripped is gripped between the plurality of holding sections, an urging force that resists the turning of the supporting section.

11. The gripping apparatus according to any one of claims 5 to 10, further comprising a position changing section that adjusts a distance between the plurality of holding sections.

12. A robot comprising the gripping apparatus according to any one of the preceding claims.

13. The robot according to claim 12, further comprising:
a wrist joint section coupled to the gripping apparatus;
a link coupled to the wrist joint section;
a shoulder joint section coupled to the link; and
a main body section in which the shoulder joint section is provided.

14. A gripping method of gripping an object to be gripped using the gripping apparatus according to any one of claims 1 to 11,
the gripping method comprising:
moving the gripping apparatus to locate the object to be gripped between the plurality of holding sections;
reducing a distance between the plurality of holding sections to thereby grip the object to be gripped between the film-like members of the plurality of holding sections;
moving the gripping apparatus in a state in which the gripping apparatus grips the object to be gripped; and
increasing the distance between the plurality of holding sections to thereby release the object to be gripped.
